# EUROPEAN PATENT SPECIFICATION

(11) **EP 4 512 160 B1**
(45) Date of publication and mention of the grant of the patent: **02.09.2026**
(21) Application number: 23734112.8
(22) Date of filing: 09.05.2023
(51) Int. Cl.: H04W 64/00, G01S 5/02, H04L 5/00, H04W 24/02, H04W 24/10, H04W 72/0446, H04W 88/08, H04W 88/12, H04W 92/12

(54) **MANAGING POSITIONING REFERENCE SIGNAL PROCESSING WINDOW CONFIGURATION**
VERWALTUNG DER KONFIGURATION DES FENSTERS FÜR DIE VERARBEITUNG DES POSITIONSREFERENZSIGNALS
GESTION DE LA CONFIGURATION DE LA FENÊTRE DE TRAITEMENT DU SIGNAL DE RÉFÉRENCE DE POSITIONNEMENT

(30) Priority: 09.05.2022 US 202263339959 P
(43) Date of publication of application: 26.02.2025
(73) Proprietor: GOOGLE LLC, Mountain View CA 94043 (US)
(72) Inventor: WU, Chih-Hsiang, Mountian View, CA 94043 (US)
(74) Representative: Marks & Clerk GST
(86) International application number: PCT/US2023/066799
(87) International publication number: WO 2023/220612

(56) References cited:
- HUAWEI ET AL: "(TP for POS BL CR for TS 38.473) Remaining Open Issues on Positioning Latency Improvement", vol. RAN WG3, no. E-Meeting; 20220221 - 20220303, 11 February 2022 (2022-02-11), XP052107989, Retrieved from the Internet <URL:https://ftp.3gpp.org/tsg_ran/WG3_Iu/TSGR3_115-e/Docs/R3-222200.zip R3-222200.docx> [retrieved on 20220211]
- HUAWEI ET AL: "Introduction of NR Positioning enhancements", vol. RAN WG3, no. eLocation; 20220221 - 20220303, 7 March 2022 (2022-03-07), XP052125819, Retrieved from the Internet <URL:https://ftp.3gpp.org/tsg_ran/WG3_Iu/TSGR3_115-e/Docs/R3-222672.zip R3-222672.docx> [retrieved on 20220307]
- HUAWEI: "Discussion on (de)activation of PPW", vol. RAN WG3, no. E-meeting; 20220509 - 20220519, 26 April 2022 (2022-04-26), XP052143041, Retrieved from the Internet <URL:https://ftp.3gpp.org/tsg_ran/WG3_Iu/TSGR3_116-e/Docs/R3-223192.zip R3-223192.doc> [retrieved on 20220426]
- "3rd Generation Partnership Project; Technical Specification Group Radio Access Network; NG-RAN; F1 application protocol (F1AP) (Release 17)", vol. RAN WG3, no. V17.0.0, 6 April 2022 (2022-04-06), pages 1 - 645, XP052146540, Retrieved from the Internet <URL:https://ftp.3gpp.org/Specs/archive/38_series/38.473/38473-h00.zip 38473-h00.doc> [retrieved on 20220406]
- "3rd Generation Partnership Project; Technical Specification Group Radio Access Network; NR; Radio Resource Control (RRC) protocol specification (Release 17)", vol. RAN WG2, no. V17.0.0, 19 April 2022 (2022-04-19), pages 1 - 1221, XP052146036, Retrieved from the Internet <URL:https://ftp.3gpp.org/Specs/archive/38_series/38.331/38331-h00.zip 38331-h00.docx> [retrieved on 20220419]
- "3rd Generation Partnership Project; Technical Specification Group Radio Access Network; NR; Medium Access Control (MAC) protocol specification (Release 17)", vol. RAN WG2, no. V17.0.0, 14 April 2022 (2022-04-14), pages 1 - 221, XP052145972, Retrieved from the Internet <URL:https://ftp.3gpp.org/Specs/archive/38_series/38.321/38321-h00.zip 38321-h00.docx> [retrieved on 20220414]
- "3rd Generation Partnership Project; Technical Specification Group Radio Access Network; NG-RAN; NR Positioning Protocol A (NRPPa) (Release 17)", vol. RAN WG3, no. V17.0.0, 6 April 2022 (2022-04-06), pages 1 - 195, XP052146529, Retrieved from the Internet <URL:https://ftp.3gpp.org/Specs/archive/38_series/38.455/38455-h00.zip 38455-h00.doc> [retrieved on 20220406]
- QUALCOMM INCORPORATED: "Corrections to Measurement Pre-configuration Information Transfer", vol. RAN WG3, no. Electronic; 20220509 - 20220520, 26 April 2022 (2022-04-26), XP052143179, Retrieved from the Internet <URL:https://ftp.3gpp.org/tsg_ran/WG3_Iu/TSGR3_116-e/Docs/R3-223371.zip R3-223371_(NRPPa CR for PPW).doc> [retrieved on 20220426]
- ERICSSON: "Discussion on positioning PRS processing window signalling and latency gain aspects", vol. RAN WG3, no. 20220221 - 20220303, 10 February 2022 (2022-02-10), XP052107366, Retrieved from the Internet <URL:https://ftp.3gpp.org/tsg_ran/WG3_Iu/TSGR3_115-e/Docs/R3-221949.zip R3-221949 positioning_latency.docx> [retrieved on 20220210]
- ERICSSON ET AL: "Addition of Positioning QoS information", vol. RAN WG3, no. Online; 20220509 - 20220519, 25 April 2022 (2022-04-25), XP052139423, Retrieved from the Internet <URL:https://ftp.3gpp.org/tsg_ran/WG3_Iu/TSGR3_116-e/Docs/R3-223361.zip R3-223361_CR_F1AP_QoS.docx> [retrieved on 20220425]

## Description

### CROSS-REFERENCE TO RELATED APPLICATION

This application claims priority to and the benefit of the filing date of provisional U.S. Patent Application No. 63/339,959, entitled "Managing Positioning Reference Signal Processing Window Configuration," filed on May 9, 2022.

### FIELD OF THE DISCLOSURE

This disclosure relates generally to wireless communications and, more particularly, to managing positioning reference signal (PRS) processing window configuration(s) for positioning measurement.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Location Services (LCS) allow a user equipment unit (UE) and/or a base station to determine the geographic location of the UE when, for example, the UE is not capable of determining its location due to limited hardware capability, the UE receives insufficient satellite or other beacon signals, or the base station attempts to locate the UE in an emergency situation.

Entities that support LCS in a core network (CN) include a Location Management Function (LMF) and an Evolved Serving Mobile Location Center (E-SMLC), for example. In some examples, a UE exchanges messages with an LMF using a positioning protocol, such as the LTE positioning protocol (LPP). Similarly, a UE sends LPP messages to an access management function (AMF) operating in a CN, in an uplink (UL) non-access stratum (NAS) Transport message. The AMF in turn sends the LPP messages to the LMF or E-SMLC. In the downlink direction, the AMF sends LPP messages from the LMF or E-SMLC to the UE using downlink (DL) NAS Transport messages.

Preconfigured PRS processing window (PPW) procedures are specified for positioning measurement. More specifically, the LMF transmits a Measurement Preconfiguration Required message to a gNB to request the gNB to configure a preconfigured PPW for the UE. After or in response to receiving the Measurement Preconfiguration Required message, the gNB transmits an RRC reconfiguration message including a preconfigured PPW configuration to the UE. Later in time, when the gNB receives a Measurement Activation message from the LMF, the gNB transmits a PPW activation command to the UE to activate the preconfigured PPW configuration. In response to or after receiving the PPW activation command, the UE activates the preconfigured PPW configuration and uses the preconfigured PPW configuration to perform measurements on DL reference signal (e.g., positioning reference signal (PRS) for positioning. However, it is not clear how to configure and activate a preconfigured PPW configuration in a distributed base station. Further, it is also not clear how to deactivate and release a preconfigured PPW configuration in a distributed base station.

### Prior art is:

### HUAWEI ET AL:

- "(TP for POS BL CR for TS 38.473) Remaining Open Issues on Positioning Latency Improvement", R3-222200,
- "Introduction of NR Positioning Enhancements", R3-222672
- "Discussion on (de)activation of PPW", R3-223192,
and
3GPP TS 38.331 V17.0.0, 19 April 2022,
3GPP TS 38.455 V17.0.0, 6 April 2022,
3GPP TS 38.473 V17.0.0, 6 April 2022

### SUMMARY

The invention is defined by the independent claims. Further features of exemplary embodiments are defined in dependent claims.

### BRIEF DESCRIPTION OF THE DRAWINGS

Fig. 1A is a block diagram of an example wireless communication system in which a user device and a base station of this disclosure can implement the techniques of this disclosure for managing small data transmission;
Fig. 1B is a block diagram of an example base station in which a centralized unit (CU) and a distributed unit (DU) can operate in the system of Fig. 1A;
Fig. 2A is a block diagram of an example protocol stack according to which the UE of Fig. 1A communicates with base stations;
Fig. 2B is a block diagram of an example protocol stack according to which the UE of Fig. 1A communicates with a CU and a DU;
Fig. 3A illustrates an example scenario in which a DU and a CU transmit PPW configurations and information for activating and performing PPW measurements;
Fig. 3B illustrates an example scenario similar to Fig. 3A, but in which the CU requests the PPW configurations from the DU in a request message;
Fig. 3C illustrates an example scenario similar to Fig. 3A, but in which the DU transmits the PPW configurations in a measurement preconfiguration confirmation response;
Fig. 3D illustrates an example scenario similar to Fig. 3A, but in which the UE deactivates PPW configurations after activating the configurations and/or performing measurements using such;
Fig. 3E illustrates an example scenario similar to Fig. 3A, but in which the CU and DU transmit messages to release the PPW configurations at the UE;
Fig. 3F illustrates an example scenario similar to Fig. 3E, but in which the DU determines to release the PPW configurations at the UE;
Fig. 4A is a flow diagram of an example method implemented in a DU for transmitting a PPW configurations to a CU and then transmits a PPW activation command to the UE after receiving a response from the CU;
Fig. 4B is a flow diagram of an example method similar to Fig. 4A, but in which the DU receives a request from the CU for the PPW configurations;
Fig. 4C is a flow diagram of an example method similar to Fig. 4A, but in which the DU transmits the PPW configurations to the CU and then transmits the activation command to the UE;
Fig. 5A is a flow diagram of an example method implemented in a CU for receiving PPW configurations from a DU and transmitting a response to the CU including the PPW configurations;
Fig. 5B is a flow diagram of an example method similar to Fig. 5A, but in which the CU transmits a request to the DU for the PPW configurations and receives the configurations from the DU;
Fig. 5C is a flow diagram of an example method similar to Fig. 5A, but in which the CU receives the PPW configurations from the DU in response to a request to configure PPW for the UE;
Fig. 6A is a flow diagram of an example method implemented in a CU for receiving a message from a DU including PPW release information and transmitting a message including the PPW release information to the UE via the DU;
Fig. 6B is a flow diagram of an example method similar to Fig. 6A, but in which the CU generates the release information for releasing PPW configurations at the UE; and
Fig. 7 is a flow diagram of an example method implemented in a DU for receiving a message from the CU to release PPW configurations for the UE and transmitting the release information to the UE.

### DETAILED DESCRIPTION OF THE DRAWINGS

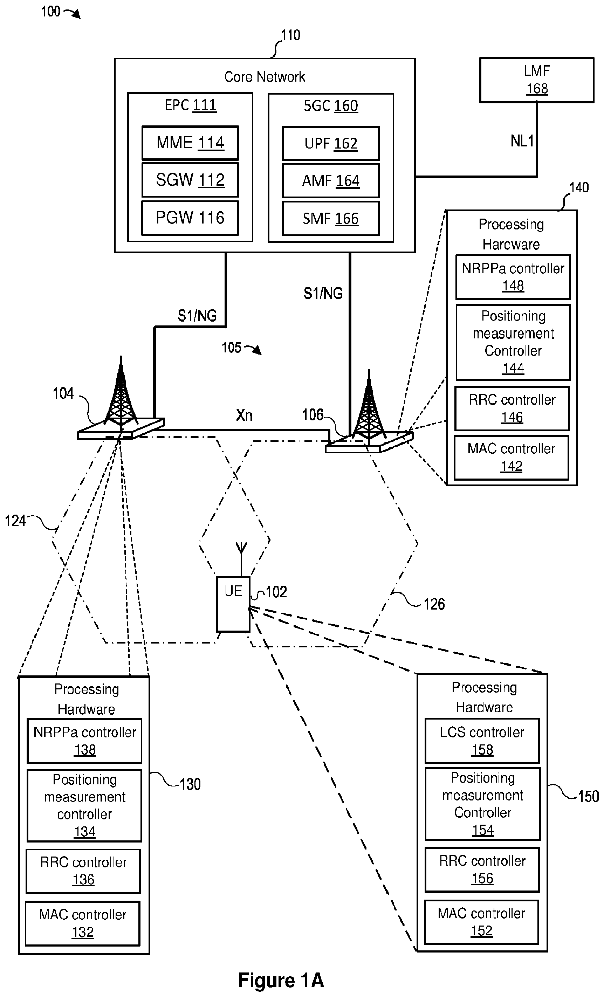

Referring first to Fig. 1A, an example wireless communication system 100 includes a UE 102, a base station (BS) 104, a base station 106, and a core network (CN) 110. The base stations 104 and 106 can operate in a RAN 105 connected to the core network (CN) 110. The CN 110 can be implemented as an evolved packet core (EPC) 111 or a fifth generation (5G) core (5GC) 160, for example. The CN 110 can also be implemented as a sixth generation (6G) core in another example.

The base station 104 covers a cell 124, and the base station 106 covers a cell 126. If the base station 104 is a gNB, the cell 124 is an NR cell. If the base station 104 is an ng-eNB, the cell 124 is an evolved universal terrestrial radio access (E-UTRA) cell. Similarly, if the base station 106 is a gNB, the cell 126 is an NR cell, and if the base station 106 is an ng-eNB, the cell 126 is an E-UTRA cell. The cells 124 and 126 can be in the same Radio Access Network Notification Areas (RNA) or different RNAs. In general, the RAN 105 can include any number of base stations, and each of the base stations can cover one, two, three, or any other suitable number of cells. The UE 102 can support at least a 5G NR (or simply, "NR") or E-UTRA air interface to communicate with the base stations 104 and 106. Each of the base stations 104, 106 can connect to the CN 110 via an interface (e.g., S1 or NG interface). The base stations 104 and 106 also can be interconnected via an interface (e.g., X2 or Xn interface) for interconnecting NG RAN nodes.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE 102 to one or more external packet data networks, e.g., an Internet network and/or an Internet Protocol (IP) Multimedia Subsystem (IMS) network. The 5GC 160 includes a User Plane Function (UPF) 162 and an Access and Mobility Management Function (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

A location management function (LMF) 168 manages the support of different location services for UEs, including positioning of the UEs and delivery of assistance data to the UEs. The LMF 168 is interconnected with the AMF 164 via an interface (e.g., NL1 interface). The LMF 168 may interact with a base station (e.g., the base station 104 or 106) for a UE (e.g., the UE 102) in order to obtain position measurements for the UE, including uplink measurements made by the base station and downlink measurements made by the UE that were provided to the base station. The LMF may interact with the UE in order to deliver assistance data to the UE (if requested by the UE) for a particular location service, or to obtain a location estimate.

The LMF 168 may interact with multiple base stations (e.g., base stations 104 and 106) to provide assistance data information for broadcasting. The assistance data information for broadcast may optionally be segmented and/or ciphered by the LMF 168. The LMF 168 may also interact with AMFs to provide ciphering key data information to the AMF as described in greater detail in TS 23.273.

For positioning of a UE, the LMF 168 decides on one or more position methods to be used, based on factors that may include a LCS client type, a required QoS, UE positioning capabilities of the UE, and positioning capabilities of a base station serving the UE. The LMF 168 then invokes the positioning method(s) in the UE and/or base station. The positioning methods may yield a location estimate for UE-based position methods and/or positioning measurements for UE-assisted and network-based position methods. The LMF 168 may combine all the received results and determine a single location estimate for the UE (hybrid positioning). Additional information like accuracy of the location estimate and velocity may also be determined.

As illustrated in Fig. 1A, the base station 104 supports a cell 124, and the base station 106 supports a cell 126. The cells 124 and 126 can partially overlap, so that the UE 102 can select, reselect, or hand over from one of the cells 124 and 126 to the other. To directly exchange messages or information, the base station 104 and base station 106 can support an X2 or Xn interface. In general, the CN 110 can connect to any suitable number of base stations supporting NR cells and/or EUTRA cells.

The base station 104 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware 130 in an example implementation includes a Medium Access Control (MAC) controller 132 configured to perform a random access procedure with one or more user devices, receive uplink MAC protocol data units (PDUs) to one or more user devices, and transmit downlink MAC PDUs to one or more user devices. The processing hardware 130 can also include a positioning measurement controller 134 configured to manage positioning measurement related procedures and manage PPW configuration(s) for one or more UEs communicating with the base station 104. The processing hardware further can include an RRC controller 136 to implement procedures and messaging at the RRC sublayer of the protocol communication stack. The processing hardware 130 in an example implementation includes an NRPPa controller 138 configured to manage communications with the LMF 168 via a NR Positioning Protocol A (NRPPa) to enable positioning and location services for one or more UEs. The base station 106 can include generally similar components. In particular, components 140, 142, 144, 146, and 148 of the base station 106 can be similar to the components 130, 132, 134, 136, and 138, respectively.

The UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes an RRC controller 156 configured to manage procedures and messaging at the RRC sublayer of the protocol communication stack. The processing hardware 150 in an example implementation includes an LCS controller 158 that generates outbound (uplink) messages related to positioning, processes inbound (downlink) messages related to positioning, and executes various procedures related to positioning. The processing hardware 150 in an example implementation includes a Medium Access Control (MAC) controller 152 configured to perform a random access procedure with a base station, transmit uplink MAC protocol data units (PDUs) and/or control elements to the base station, and receive downlink MAC PDUs and/or control elements from the base station. The processing hardware 150 can also include a positioning measurement controller 154 configured to manage positioning measurement and PPW configuration(s) configured by the RAN 105. The processing hardware further can include an RRC controller 156 to implement procedures and messaging at the RRC sublayer of the protocol communication stack.

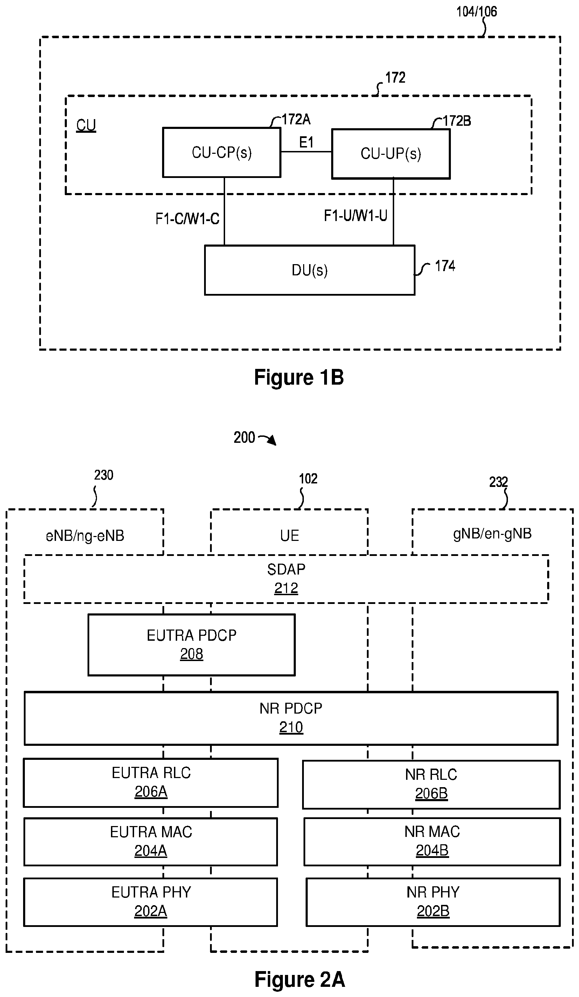

Fig. 1B depicts an example distributed or disaggregated implementation of any one or more of the base stations 104, 106. In this implementation, the base stations 104, 106 include a central unit (CU) 172 and one or more distributed units (DUs) 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include a PDCP controller, an RRC controller and/or an RRC inactive controller such as PDCP controller 134, 144, RRC controller 136, 146 and/or RRC inactive controller 138, 148. In some implementations, the CU 172 includes a radio link control (RLC) controller configured to manage or control one or more RLC operations or procedures. In further implementations, the CU 172 does not include an RLC controller.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a MAC controller (e.g., MAC controller 132, 142) configured to manage or control one or more MAC operations or procedures (e.g., a random access procedure), and/or an RLC controller configured to manage or control one or more RLC operations or procedures. The process hardware can also include a physical layer controller configured to manage or control one or more physical layer operations or procedures.

In some embodiments, the RAN 105 supports Integrated Access and Backhaul (IAB) functionality. In some implementations, the DU 174 operates as an (IAB)-node, and the CU 172 operates as an IAB-donor.

In some implementations, the CU 172 includes a logical node CU-CP 172A that hosts the control plane part of the PDCP protocol of the CU 172. In further implementations, the CU 172 includes a logical node CU-UP 172B that hosts the user plane part of the PDCP protocol and/or Service Data Adaptation Protocol (SDAP) protocol of the CU 172. Depending on the implementation, the CU-CP 172A transmits control information (e.g., RRC messages, F1 application protocol messages), and the CU-UP 172B transmits the data packets (e.g., SDAP PDUs or Internet Protocol packets).

The CU-CP 172A can connect to multiple CU-UP 172B through the E1 interface. The CU-CP 172A selects the appropriate CU-UP 172B for the requested services for the UE 102. In some implementations, a single CU-UP 172B connects to multiple CU-CP 172A through the E1 interface. The CU-CP 172A can connect to one or more DU 174s through an F1-C interface. The CU-UP 172B can connect to one or more DU 174 through the F1-U interface under the control of the same CU-CP 172A. In some implementations, one DU 174 connects to multiple CU-UP 172B under the control of the same CU-CP 172A. In such implementations, the CU-CP 172A establishes the connectivity between a CU-UP 172B and a DU 174 by using Bearer Context Management functions.

Fig. 2A illustrates, in a simplified manner, an example protocol stack 200 according to which the UE 102 can communicate with an eNB/ng-eNB or a gNB (e.g., one or more of the base stations 104, 106).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to an EUTRA PDCP sublayer 208 and, in some cases, to an NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. In some implementations, the NR PDCP sublayer 210 then provides data transfer services to Service Data Adaptation Protocol (SDAP) 212 or a radio resource control (RRC) sublayer (not shown in Fig. 2A). The UE 102, in some implementations, supports both the EUTRA and the NR stack as shown in Fig. 2A, to support handover between EUTRA and NR base stations and/or to support DC over EUTRA and NR interfaces. Further, as illustrated in Fig. 2A, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

In some implementations, on a control plane, the EUTRA PDCP sublayer 208 and the NR PDCP sublayer 210 provides signaling radio bearers (SRBs) or RRC sublayer (not shown in Fig. 2A) to exchange RRC messages, non-access-stratum (NAS) messages or LPP messages, for example. In further implementations, on a user plane, the EUTRA PDCP sublayer 208 and the NR PDCP sublayer 210 provides Data Radio Bearers (DRBs) to support data exchange. Data exchanged on the NR PDCP sublayer 210 can be SDAP PDUs, Internet Protocol (IP) packets, or Ethernet packets.

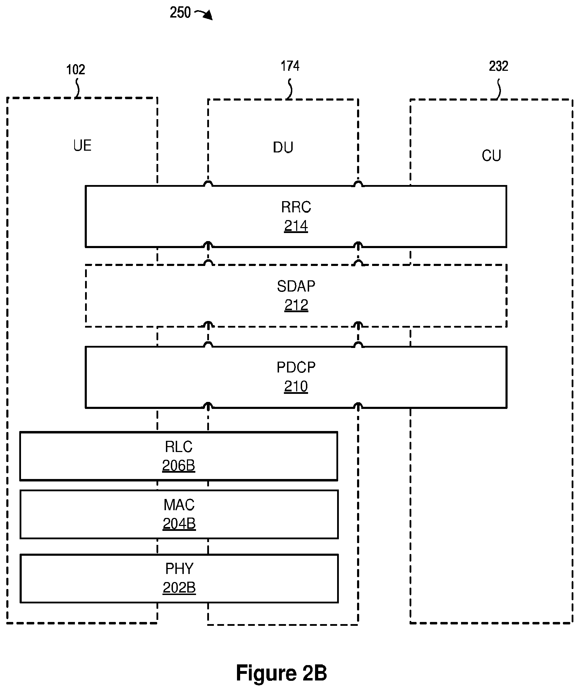

Fig. 2B illustrates, in a simplified manner, an example protocol stack 250, via which the UE 102 can communicate with a DU (e.g., DU 174) and a CU (e.g., CU 172). The radio protocol stack 200 is functionally split as shown by the radio protocol stack 250 in Fig. 2B. The CU at any of the base stations 104 or 106 can hold all the control and upper layer functionalities (e.g., RRC 214, SDAP 212, NR PDCP 210), while the lower layer operations (e.g., NR RLC 206B, NR MAC 204B, and NR PHY 202B) are delegated to the DU. To support connection to a 5GC, NR PDCP 210 provides SRBs to RRC 214, and NR PDCP 210 provides DRBs to SDAP 212 and SRBs to RRC 214.

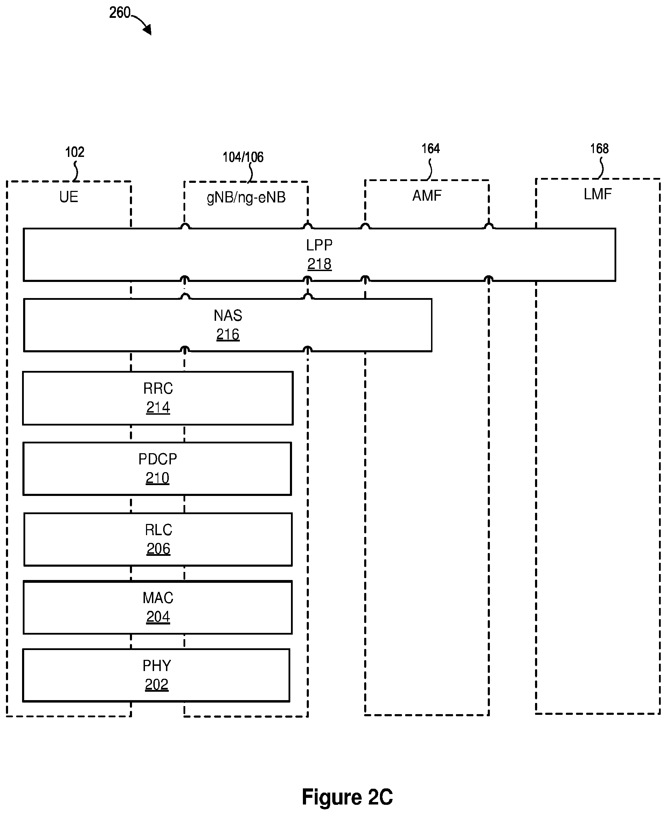

Now referring to Fig. 2C, in a known wireless communication system, a UE and a gNB/ng-eNB support a physical layer (PHY) 202 of EUTRA or NR. The PHY layer 202 provides transport channels to the Medium Access Control (MAC) 204 sublayer, which in turn provides logical channels to the Radio Link Control (RLC) sublayer 206, and the RLC sublayer provides RLC channels to the Packet Data Convergence Protocol (PDCP) sublayer 210. The sublayer 210 PDCP sublayer provides signaling radio bearers (SRBs) and/or data radio bearers (DRBs) to the radio resource control (RRC) sublayer 210.

The UE and the AMF operating in the core network exchange messages of a non-access stratum (NAS) sublayer 216 via the gNB/ng-eNB, and the UE and the LMF, also operating in the core network, exchange messages of an LPP layer 218 via the gNB/ng-eNB and the AMF. In other words, the UE and LMF encapsulate LPP messages in NAS messages, and encapsulate NAS messages in RRC messages. The gNB/ng-eNB according to this architecture provides tunneling to the layers 216 and 218, and does not route or otherwise process messages at the layers 216, 218.

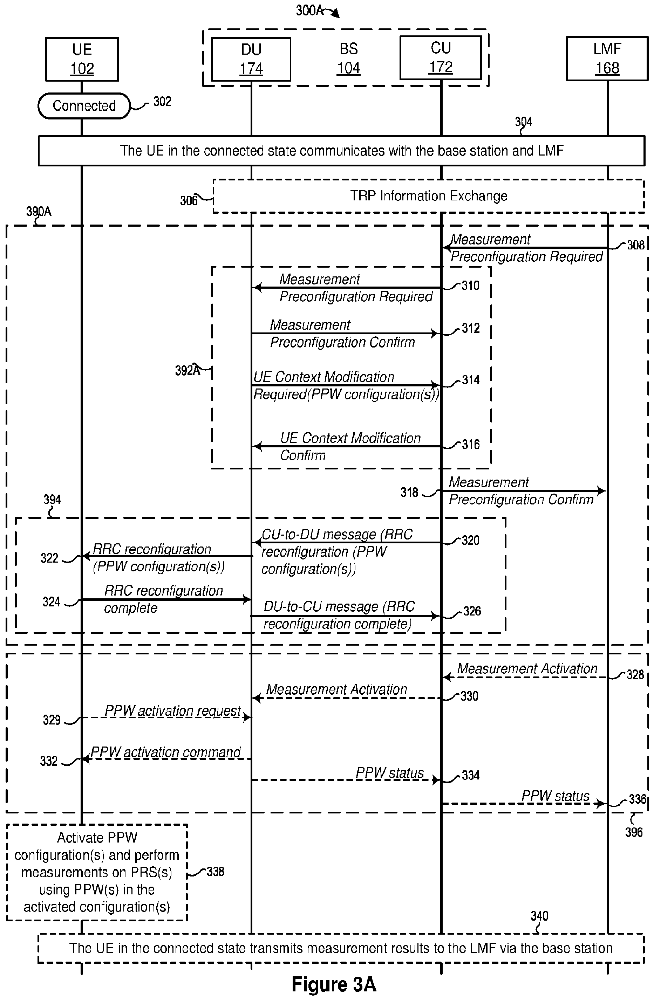

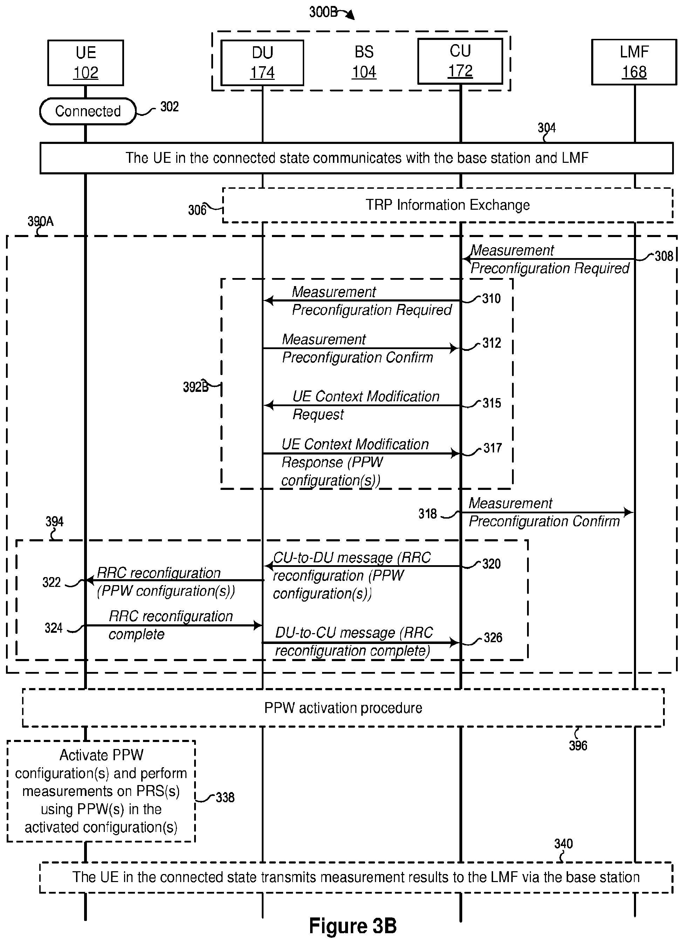

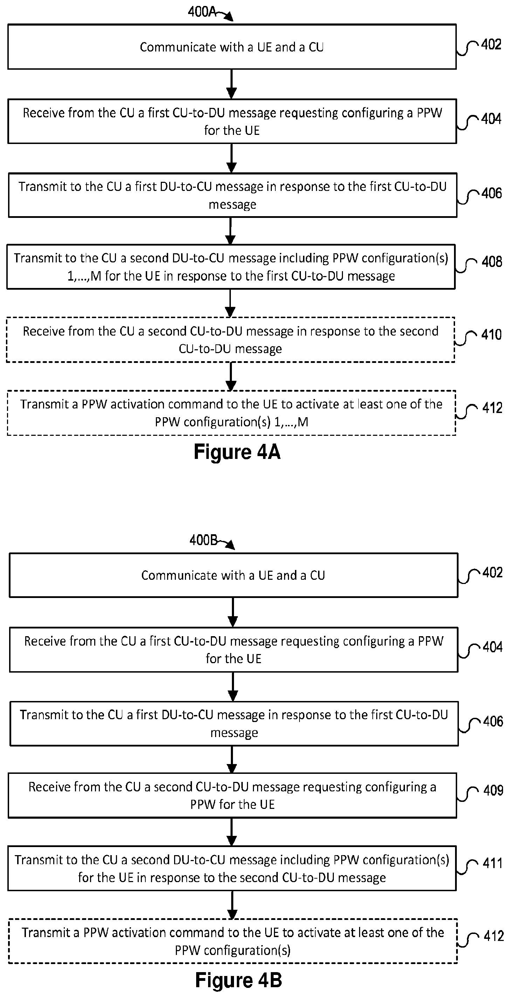

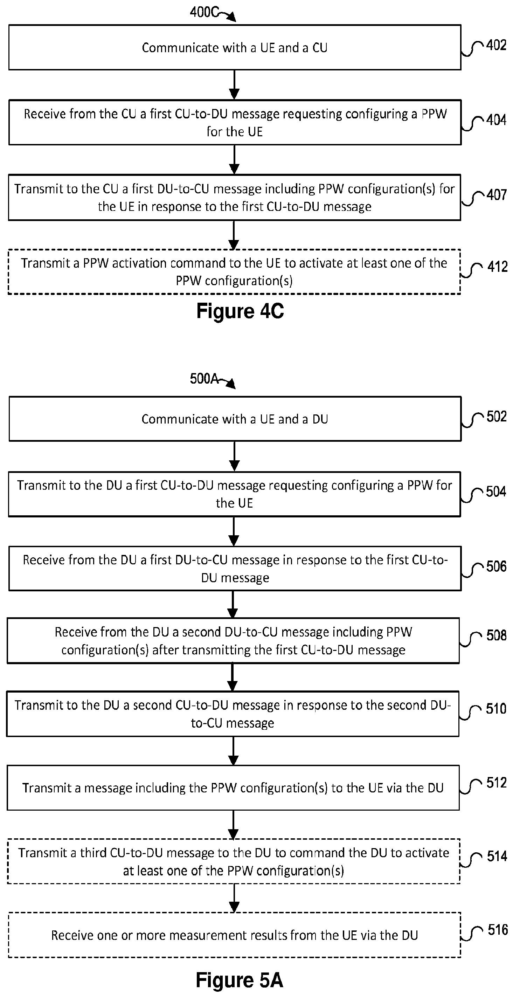

Next, several example scenarios that involve several components of Fig. 1A and relate to transmitting data in an inactive or idle state are discussed next with reference to Figs. 3A-5C. Generally speaking, similar events in Figs. 3A-5C are labeled with the similar reference numbers (e.g., event 302 in Fig. 3A is similar to event 302 in Figs. 3B-3G, event 402 in Figs. 4A-4C and event 502 in Figs. 5A-5C), with differences discussed below where appropriate. With the exception of the differences shown in the figures and discussed below, any of the alternative implementations discussed with respect to a particular event (e.g., for messaging and processing) may apply to events labeled with similar reference numbers in other figures and also to both integrated and distributed base stations.

To simplify the following description, the "inactive state" is used and can represent the RRC_INACTIVE or RRC_IDLE state, and the "connected state" is used and can represent the RRC_CONNECTED state.

Referring first to Fig. 3A, which illustrates a scenario 300A in which the base station 104 includes a central unit (CU) 172 and a distributed unit (DU) 174. Depending on the implementation, the DU 174 operates one or more Transmission-Reception Point(s) (TRP(s)) (not shown in Fig. 3A). In the scenario 300, the UE 102 initially operates in a connected state 302 and communicates 304 with the DU 174, such as by using a DU configuration. While communicating 304 with the DU 174, the UE 102 uses a cell radio network temporary identifier (C-RNTI) to receive uplink grants and downlink assignments from the DU 174. The UE 102 transmits UL data to the DU 174 using the uplink grants and receives DL data from the DU 174 using the downlink assignments. The UE 102 further communicates 304 with the CU 172 via the DU 174 by using a CU configuration. The UE 102 communicates 304 LPP messages with the LMF 168 via the CU 172 and DU 174. In some implementations, the CU 172 exchanges the LPP messages with the LMF 168 directly or via the AMF 164. Before or while the UE communicates 304 with the base station 104, depending on the implementation, the LMF 68 performs 306 a TRP Information Exchange procedure with the base station 104 to obtain detailed information for TRPs hosted by the base station 104.

In some implementations, the LMF 168 transmits a *TRP Information Request* message (i.e., LMF-to-BS message or NRPPa message) to the CU 172 to perform the TRP Information Exchange procedure. In response to or after receiving the LMF-to-BS message, the CU 172 transmits at least one *TRP Information Request* message (i.e., CU-to-DU message(s) or F1AP message(s)) to the DU 174 to request the DU 174 to provide detailed information for TRP(s) hosted by the DU 174. In response to each of the CU-to-DU messages, the DU 174 transmits a *TRP Information Response* message (i.e., DU-to-CU message or F1AP message) including TRP information of a particular TRP to the CU 172. In some implementations, the CU 172 transmits at least one *TRP Information Request* message (i.e., CU-to-DU message(s) or F1AP message(s)) to other DU(s) (not shown in Fig. 3A) to request the other DU(s) to provide detailed information for TRP(s) operated by the other DU(s). In response to each of the at least one CU-to-DU message that is received by a particular DU of the other DU(s), the particular DU transmits a *TRP Information Response* message (i.e., DU-to-CU message or F1AP message) including TRP information of a particular TRP to the CU 172.

After receiving all of the at least one DU-to-CU message from the DU 174 and/or the other DU(s), the CU 172 transmits, to the LMF 168, a BS-to-LMF message (e.g., *TRP Information Response* message) including the TRP information received from the DU 174 and/or the other DU(s). In some implementations, the TRP information for a particular TRP includes a positioning reference signal (PRS) configuration, a physical cell identity (PCI) and/or a cell global identifier (CGI). In some implementations, the DU-to-CU message includes a TRP ID of a particular TRP as well as the TRP information of the TRP, and the CU 172 includes the TRP ID and TRP information in the BS-to-LMF message.

After performing 306 the TRP Information Exchange procedure, the LMF 168 transmits 308, to the CU 172, a *Measurement Preconfiguration Required* message (i.e., LMF-to-BS message or NRPPa message) to request to configure PRS processing window(s) (PPW(s)) for the UE 102 to measure PRS(s) transmitted by the TRP(s). In some implementations, the LMF 168 includes TRP PRS information item(s) (e.g., *TRP-PRS-Information-List-Item* IE(s)) in the *Measurement Preconfiguration Required* message of event 308. In some implementations, each of the TRP PRS information item(s) includes a PRS configuration, PCI, CGI, and/or TRP ID of a particular TRP of the TRP(s) operated by the DU 174. In some implementations, the LMF 168 determines the TRP PRS information item(s) in accordance with the at least one DU-to-CU message (e.g., the TRP ID(s) and TRP information) of the TRP Information Exchange procedure. In further implementations, the LMF 168 includes PPW information in the *Measurement Preconfiguration Required* message of event 308 to indicate to the CU 172 to configure PPW(s) for the UE 102. The DU 174 generates the PPW configuration(s) taking the PPW information into account. In some implementations, the PPW information includes PRS processing capabilities of the UE 102. Depending on the implementation, the PRS processing capabilities are associated with one or more freqeuncy bands supported by the UE 102. In other implementations, the PPW information includes PPW configuration parameters.

After or in response to receiving 308 the message, the CU 172 transmits 310 to the DU 174 a *Measurement Preconfiguration Required* message (i.e., CU-to-DU message or F1AP message), including the TRP PRS information item(s), to request to configure PPW(s) for the UE 102. In some implementations, the CU 172 includes the PPW information in the *Measurement Preconfiguration Required* message. In response, the DU 174 transmits 312, to the CU 172, a *Measurement Preconfiguration Confirm* message (i.e., DU-to-CU message or F1AP message) to confirm configuration of PPW(s) for the UE 102. After or in response to receiving 312 the *Measurement Preconfiguration Confirm* message, the DU 174 transmits 314, to the CU 172, a *UE Context Modification Required* message including PPW configuration(s) for the UE 102. The PPW configuration(s) configures PPW(s) for the UE 102 without or outside measurement gap(s) to measure PRS(s) transmitted by the TRP(s). In some implementations, the DU 174 generates the PPW configuration(s) in accordance with the TRP PRS information item(s) and/or the PPW information. In some implementations, the DU 174 generates a container configuration (e.g., a *CellGroupConfig* IE, a *BWP-DownlinkDedicated* IE, *DL-PRSProcessingWindowPreConfigAddModList* IE, or *DL-PRSProcessingWindowPreConfigAddModList-r17* IE) including the PPW configuration(s) (e.g., *DL-PRS-ProcessingWindowPreConfig* or *DL-PRS-ProcessingWindowPreConfig-r17* IE(s)) and include the container configuration in the *UE Context Modification Required* message. In some implementations, the DU 174 transmits 314 the *UE Context Modification Required* message before or after transmitting 312 the *Measurement Preconfiguration Confirm* message. In some implementations, the DU 174 generates the container configuration and/or the PPW configuration(s) as an RRC IE and/or RRC IE(s), respecitvely.

In some implementations, the DU 174 does not include the PPW configuration(s) as interface IE(s) (e.g., F1AP IE(s)) in the *Measurement Preconfiguration Confirm* message. In some such implementations, the PPW configuration(s) are transparent to the CU 172. In other implementations, the DU 174 includes at least some of the PPW information as interface IE(s) (e.g., F1AP IE(s)) in the *Measurement Preconfiguration Confirm* message. In some such implementations, the PPW configuration(s) are non-transparent to the CU 172.

In response to or after receving 314 the *UE Context Modification Required* message, the CU 172 transmits 316 a *UE Context Modification Confirm* message to the DU 174. After receiving 312 the *Measurement Preconfiguration Confirm* message, receving 314 the *UE Context Modification Required* message, or transmitting 316 the *UE Context Modification Confirm* message, the CU 172 transmits 318 a *Measurement Preconfiguration Confirm* message (i.e., a BS-to-LMF message or a NRPPa message) to the LMF 168 to confirm configuration of PPW(s) for the UE 102.

In some implementations, the DU 174 assigns a PPW ID for each of the PPW configuration(s). In some implementations, the DU 174 includes the PPW ID in the corresponding PPW configuration. In other implementations, the DU 174 includes the PPW ID(s) in the container configuration along with the PPW configuration(s). In some implementations, the DU 174 includes a PCI in each of the PPW configuration(s). The DU 174 sets the PCI to a PCI in a particular TRP PRS information item associated with the PPW configuration. In some implementations, the DU 174 associates the PPW ID(s) and/or PPW configuration(s) with the TRP PRS information item(s). In some implementations, the DU 174 associates a particular PPW ID and the corresponding PPW configuration with a particular one of the TRP PRS information item(s). In other implementations, the DU 174 associates a particular PPW ID and/or the corresonding PPW configuration with some of the TRP PRS information item(s). In yet other implementations, the DU 174 associates particular PPW IDs and/or the corresponding PPW configurations with a particular one of the TRP PRS information item(s).

In some implementations, the DU 174 determines serving cell ID(s) based on PCI(s) in the TRP PRS information item(s) and includes the serving cell ID(s) in the container configuration or in a CellGroupConfig IE including the container configuration. In some implementations, the DU 174 creates a table to store the assocation(s) between the PPW ID(s), serving cell ID(s), and/or PPW configuration(s), and the TRP PRS information item(s).

In other implementations, the CU 172 assigns a PPW ID for each of the PPW configuration(s). In some implementations, the CU 172 includes the PPW ID in the corresponding PPW configuration. In other implementations, the CU 172 includes the PPW ID(s) in the container configuration along with the PPW configuration(s). In some implementations, the CU 172 associates the PPW ID(s) with the TRP PRS information item(s). In some implementations, the CU 172 associates a particular one of the PPW ID(s) with a particular one of the TRP PRS information item(s). In other implementations, the CU 172 associates a particular one of the PPW ID(s) with some of the TRP PRS information item(s). In yet other implementations, the CU 172 associates particular PPW IDs and/or the corresponding PPW configurations with a particular one of the TRP PRS information item(s). In some implementations, the CU 172 creates a table to store the assocation(s) between the PPW ID(s) and TRP PRS information item(s). In further implementations, the CU 172 includes a PCI in each of the PPW configuration(s). Depending on the implementation, the CU 172 sets the PCI to a PCI In a TRP PRS information item associated with the PPW configuration. In some implementations, the CU 172 determines a serving cell ID for the PCI and includes the serving cell ID in the container configuration or in a CellGroupConfig IE including the container configuration.

The events 310, 312, 314, and 316 are collectively referred to in Fig. 3A as a PPW (pre)configuration procedure 392A.

After receiving the PPW configuration(s) or the container configuration, the CU 172 generates an RRC reconfiguration message (e.g., *RRCReconfiguration* message) including the PPW configuration(s) or container configuration and transmits 320 a CU-to-DU message (e.g., *DL RRC Message Transfer* message), including the RRC reconfiguration message, to the DU 174. In turn, the DU 174 transmits 322 the RRC reconfiguration message to the UE 102. In response, the UE 102 transmits 324 an RRC reconfiguration complete message (e.g., *RRCReconfigurationComplete* message) to the DU 174, which in turn transmits 326 a DU-to-CU message (e.g., *UL RRC Message Transfer* message), including the RRC reconfiguration complete message, to the CU 172.

The events 320, 322, 324, and 326 are collectively referred to in Fig. 3A as an RRC reconfiguration procedure 394. The events 308, 310, 312, 314, 316, 318, 320, 322, 324, and 326 are collectively referred to in Fig. 3A as a PPW configuration procedure 390A. In some implementations, additional PPW configuration procedure(s) are performed to configure additional PPW configuration(s) for the UE 102, similar to the PPW configuration procedure 390A.

In some implementations, later in time, the LMF 168 transmits 328 a *Measurement Activation* message (i.e., LMF-to-BS message(s) or NRPPa message(s)) to the CU 172 to activate at least one of the PPW configuration(s) for the UE 102. In some implementations, the *Measurement Activation* message of event 328 includes PRS measurement information item(s) (e.g., *PRS-Measurements-Info-List-Item* IE(s)), each including a reference point (e.g., *pointA*), a measurement PRS periodicity (e.g., *measPRSPeriodicity*), a measurement PRS offset (e.g., *measPRSOffset*), and/or a measurement PRS length (e.g., *measurementPRSLength*). In further implementations, in response to or after receving 328 the *Measurement Activation* message, the CU 172 transmits 330 a *Measurement Activation* message (i.e., CU-to-DU message or F1AP message) to the DU 174 to activate at least one of the PPW configuration(s) for the UE 102. In some implementations, the *Measurement Activation* message of event 330 includes PRS measurement information item(s) (e.g., *PRS-Measurements-Info-List-Item* IE(s)), each including a reference point (e.g., *pointA*), a measurement PRS periodicity (e.g., *measPRSPeriodicity*), a measurement PRS offset (e.g., *measPRSOffset*), and/or a measurement PRS length (e.g., *measurementPRSLength*). The PRS measurement information item(s) of event 328 can be similar to or the same as the PRS measurement information item(s) of event 330.

Depending on the implementation, in response to or after receiving 330 the *Measurement Activation* message, the DU 174 transmits 332 a PPW activation command to the UE 102 to activate at least one of the PPW configuration(s). In other scenarios or implementations, the CU 172 transmits 330 a *Measurement Activation* message to the DU 174 in response to or after receiving an LMF-to-BS message (e.g., *Measurement Preconfiguration Required* message 308) other than the *Measurement Activation* message of event 328. In some implementations, the PPW activation command is a DL MAC control element (e.g., PPW Activation/Deactivation Command MAC CE). In such implementations, the DU 174 generates a DL MAC PDU, including the DL MAC control element and a subheader for the DL MAC control element, and transmits 332 the DL MAC PDU to the UE 102. In some implementations, the subheader includes a logical channel ID for the DL MAC control element.

Alternatively, the UE 102 transmits 329 a PPW activation request to the DU 174 to request to activate at least one of the PPW configuration(s). In some implementations, in response to or after receiving 329 the PPW activation request, the DU 174 transmits 332 the PPW activation command to the UE 102. In some implementations, the PPW activation request is a UL MAC control element (e.g., PPW Activation/Deactivation Request MAC control element). In such implementations, the UE 102 generates a UL MAC PDU, including the UL MAC control element and a subheader for the UL MAC control element, and transmits 329 the UL MAC PDU to the DU 174. In some implementations, the subheader includes a logical channel ID for the UL MAC control element. In the PPW activation request, the UE 102, in some implementations, includes at least one PPW ID indicating the PPW configuration(s) that the UE 102 requests to activate. In some implementations, the UE 102 includes, in the PPW activation request, at least one PCI or serving cell ID assocated with the at least one PPW ID. In other implementations, the UE 102 does not include a PPW ID in the PPW activation request in order to request activating all of the PPW configuration(s). In yet other implementations, the UE 102 includes a specific field with a specific value in the PPW activation request in order to request activating all of the PPW configuration(s) instead of all of the PPW ID(s).

In some implementations, the DU 174 includes at least one PPW ID indicating the PPW configuration(s) to be activated in the PPW activation command. In some implementations, the DU 174 includes, in the PPW activation command, at least one PCI or serving cell ID associated with the at least one PPW ID. In some implementations, the DU 174 determines (e.g., identifies, selects, or derives) the at least one PPW ID and/or the at least one PCI or serving cell ID based on the TRP PRS information item(s) received at event 330 and/or the association(s). In some implementations, the DU 174 performs a look up of the table to determine the at least one PPW ID and/or the at least one PCI or serving cell ID based on the TRP PRS information item(s) received at event 330. In some cases, such as receiving 329 the PW activation request, the DU 174 sets the at least one PPW ID in the PPW activation command to value(s) of the PPW ID(s) in the PPW activation request. In some implementations, the DU 174 determines serving cell ID(s) based on PCI(s) in the TRP PRS information item(s) received at event 330 and includes the serving cell ID(s) in the PPW activation command with the at least one PPW ID.

In some implementations, the DU 174 does not include a PPW ID in the PPW activation command in order to activate all of the PPW configuration(s). In further implementations, the UE 102 includes a specific field with a specific value in the PPW activation request to request activation of all of the PPW configuration(s) instead of including all of the PPW ID(s).

In some implementations, the DU 174 transmits 334, to the CU 172, a DU-to-CU message including a PPW status indicating the status (e.g., activated or deactivated) of the PPW configuration(s) after transmitting the PPW activation command to the UE 102. Thus, the CU 172 determines that the UE 102 activates the at least one of the PPW configuration(s) and/or starts performing measurements on PRS(s) transmitted by the TRP(s) from the PPW status. In some implementations, the CU 172 transmits 336 a BS-to-LMF message, including the PPW status, to the LMF 168. Thus, the LMF 168 determines that the UE 102 activates the PPW configuration(s) and/or starts performing measurements on PRS(s) transmitted by the TRP(s) from the PPW status.

The events 328, 330, 329, 332, 334, and 336 are collectively referred to in Fig. 3A as a PPW activation procedure 396. In some implementations, additional PPW activation procedure(s) are performed to activate additional PPW configuration(s) configured in the procedure 390A or additional PPW configuration procedure(s), similar to the PPW activation procedure 396.

In response to or after receiving 332 the PPW activation command, the UE 102 activates 338 the at least one PPW configuration in accordance with the PPW activation command. In some implementations, the UE 102 identifies the PPW configuration(s) in accordance with the PPW ID(s) and/or the at least one PCI or serving cell ID in the PPW activation command. After activating the PPW configuration(s), the UE 102 performs 338 measurements on PRS(s) transmitted by the TRP(s), using at least one PPW in the at least one activated PPW configuration. In some implementations, the UE 102 obtains measurement results from the measurements and transmits 340 the measurement results to the LMF 168 via the base station 104 (i.e., the DU 174 and CU 172). In some implementations, the UE 102 generates LPP message(s) (e.g., *ProvideLocationInformation* message(s)), including the measurement results, and transmits 340 the LPP message(s) to the LMF 168 via the base station 104.

In some implementations, the CU configuration includes configuration parameters in a *RadioBearerConfig* information element (IE) and/or *MeasConfig* IE (e.g., as defined in 3GPP specification 38.331 v16.7.0 or later). In some implementations, the CU configuration is or includes a *RadioBearerConfig* IE and/or a *MeasConfig* IE, and the second CU configuration is or includes a *RadioBearerConfig* IE and/or *MeasConfig* IE. In some implementations, the DU configuration includes configuration parameters related to operations of RRC, RLC, MAC, and/or PHY protocol layers (e.g., RLC 206B, MAC 204B, and/or PHY 202B) that the UE 102 and DU 174 use to communicate with one another while the UE 102 operates in the connected state. In some implementations, the DU configuration includes configuration parameters in a *CellGroupConfig* IE (e.g., as defined in 3GPP specification 38.331 v16.7.0). In some implementations, the DU configuration is a *CellGroupConfig* IE.

Referring next to Fig. 3B, a scenario 300B is generally similar to the scenario 300A, except that the CU 172 transmits 315 a *UE Context Modification Request* message to the DU 174 to request PPW configuration(s), and the DU 174 transmits 317 a *UE Context Modification Response* message including PPW configuration(s) in response. In the scenario 300B, the DU 174 refrains from transmitting a *UE Context Modification Required* message including the PPW configuration(s) to the CU 172. In some implementations, the CU 172 transmits 315 the *UE Context Modification Request* message to the DU 174 after transmitting 310 the *Measurement Preconfiguration Required* message.

In some implementations, the CU 172 includes an indication that indicates to the DU 174 to generate PPW configuration(s) for positioning measurement in the *UE Context Modification Request* message. In response to the indication, the DU 174 generates the PPW configuration(s) in accordance with the TRP PRS information item(s) and includes the PPW configuration(s) in the *UE Context Modification Response* message. In other implementations, the *UE Context Modification Request* message does not include the indication. In some such implementations, the CU 172 transmits the *UE Context Modification Request* message immediately after transmitting 310 the *Measurement Preconfiguration Required* message, so that the DU 174 can correlate the *UE Context Modification Request* message with the *Measurement Preconfiguration Required* message.

In some implementations, the DU 174 generates a container configuration (e.g., a *CellGroupConfig* IE, a *BWP-DownlinkDedicated* IE, *DL-PRSProcessingWindowPreConfigAddModList* IE, or a *DL-PRSProcessingWindowPreConfigAddModList-r17* IE) including the PPW configuration(s) (e.g., *DL-PRS-ProcessingWindowPreConfig* or *DL-PRS-ProcessingWindowPreConfig-r17* IE(s)) and includes the container configuration in the *UE Context Modification Response* message.

The events 310, 312, 315, and 317 are collectively referred to in Fig. 3B as a PPW (pre)configuration procedure 392B. The events 308, 310, 312, 315, 317, 318, 320, 322, 324, and 326 are collectively referred to in Fig. 3B as a PPW configuration procedure 390B.

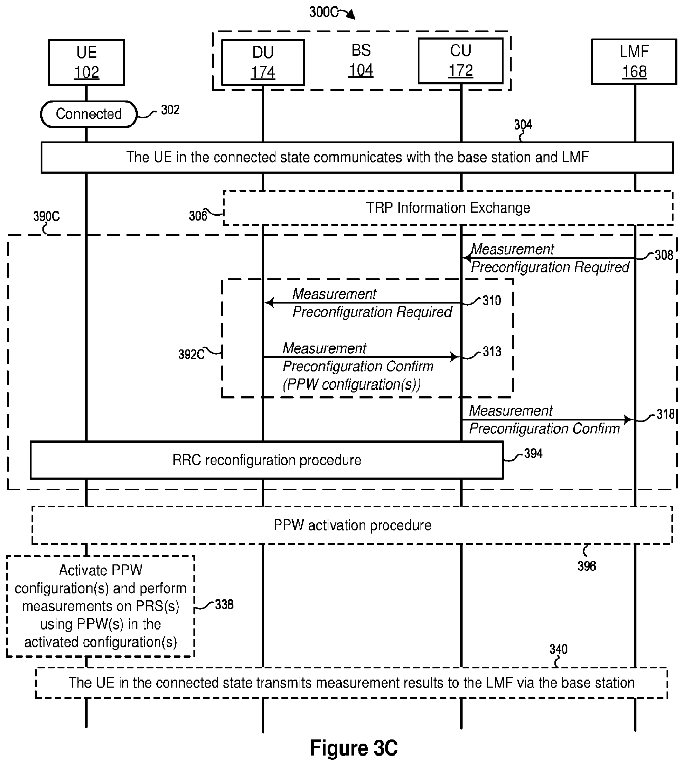

Referring next to Fig. 3C, a scenario 300C is generally similar to the scenarios 300A and 300B, except that the DU 174 transmits 313 a *Measurement Preconfiguration Confirm* message including the PPW configuration(s) in response to the *Measurement Preconfiguration Required* message of event 310. In the scenario 300C, the DU 174 refrains from transmitting a *UE Context Modification Required* message including the PPW configuration(s) to the CU 172.

In some implementations, the DU 174 generates a container configuration (e.g., a *CellGroupConfig* IE, a *BWP-DownlinkDedicated* IE, *DL-PRSProcessingWindowPreConfigAddModList* IE, or a *DL-PRSProcessingWindowPreConfigAddModList-r17* IE) including the PPW configuration(s) (e.g., *DL-PRS-ProcessingWindowPreConfig* or *DL-PRS-ProcessingWindowPreConfig-r17* IE(s)) and includes the container configuration in the *Measurement Preconfiguration Required* message of event 313.

The events 310 and 313 are collectively referred to in Fig. 3C as a PPW (pre)configuration procedure 392C. The events 308, 310, 313, 318, and 394 are collectively referred to in Fig. 3C as a PPW configuration procedure 390C.

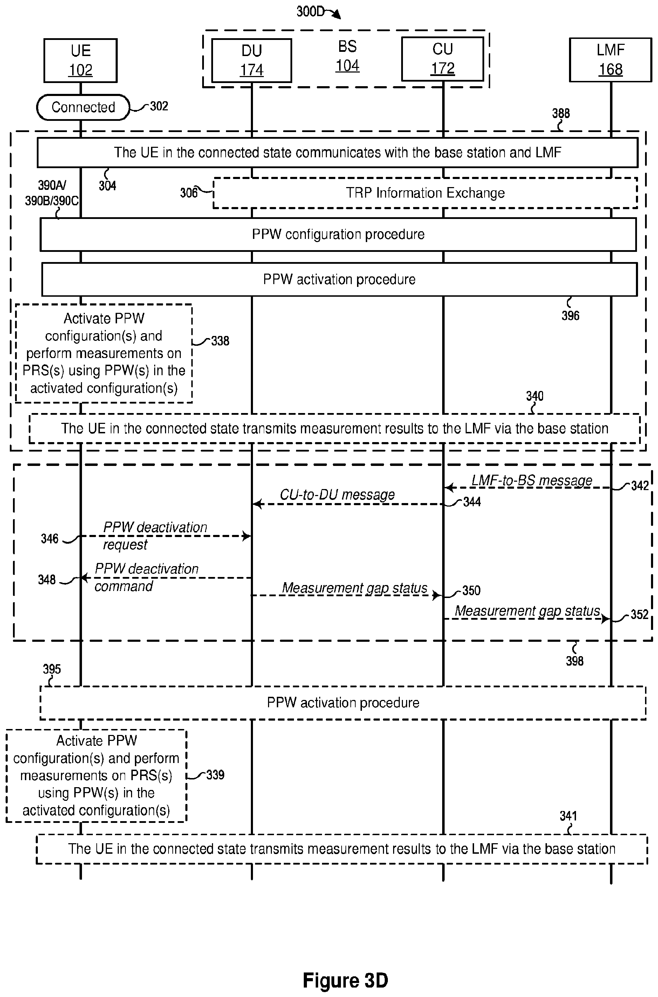

Referring next to Fig. 3D, a scenario 300D is generally similar to the scenarios 300A-C. The differences among the scenarios 300D and scenarios 300A-C are discussed below.

In the scenario 300D, the events 304, 306, 390A/390B/390C, 396, 338, and 340 are collectively referred to in Fig. 3D as a positioning measurement procedure 388. In some implementations, after the positioning measurement procedure 388, the LMF 168 transmits 342, to the CU 172, an LMF-to-BS message causing the CU 172 to deactivate at least one of the activated PPW configuration(s). In some implementations, the LMF-to-BS message is a new NRPPa message (e.g., a Measurement Deactivation message). In other implementations, the LMF-to-BS message is an existing NRPPa message (e.g., a *Measurement Abort* message). In response to or after receiving the LMF-to-BS message, the CU 172 transmits 344, to the DU 174, a CU-to-DU message causing the DU 174 to deactivate at least one of the activated PPW configuration(s). In response to or after receiving the CU-to-DU message, the DU 174 transmits 348 a PPW deactivation command to the UE 102 to deactivate at least one of the activated PPW configuration(s). In some implementations, the PPW deactivation command is a DL MAC control element (e.g., PPW Activation/Deactivation Command MAC control element). In such implementations, the DU 174 generates a DL MAC PDU including the DL MAC control element and a subheader for the DL MAC control element and transmits 348 the DL MAC PDU to the UE 102. In some implementations, the subheader includes a logical channel ID for the DL MAC control element.

In some implementations, CU 172 does not include, in the CU-to-DU message of event 344, information that the DU 174 can use to derive which PPW configuration(s) to deactivate. In such implementations, the DU 174 deactivates all of the activated PPW configuration(s) for the UE 102 in response to the CU-to-DU message of event 344. In other implementations, the CU 172 includes, in the CU-to-DU message of event 344, information (e.g., PRS measurement information item(s)) that the DU 174 can use to derive which PPW configuration(s) to deactivate.

In some implementations, the CU-to-DU message of event 344 is a new F1AP message (e.g., a Measurement Deactivation message). In other implementations, the CU-to-DU message of event 344 is an existing F1AP message (e.g., a *Measurement Preconfiguration Abort* message). In yet other implementations, the CU-to-DU message of event 344 is a *Measurement Activation* message not including PRS measurement information item(s) (e.g., *PRS-Measurements-Info-List-Item* IE(s)). In such implementations, the *Measurement Activation* message is treated as a Measurement Deactivation message. In yet other implementations, the CU-to-DU message of event 344 is a *Measurement Activation* message including PRS measurement information item(s) (e.g., *PRS-Measurements-Info-List-Item* IE(s)) and a deactivation indication for each of the PRS measurement information item(s).

Alternatively, the UE 102 transmits 346 a PPW deactivation request to the DU 174 to request to deactivate at least one of the activated PPW configuration(s). Depending on the implementation, in response to or after receiving 346 the PPW deactivation request, the DU 174 transmits 348 the PPW deactivation command to the UE 102. In some implementations, the PPW deactivation request is a UL MAC control element (e.g., PPW Activation/Deactivation Request MAC control element). In such implementations, the UE 102 generates a UL MAC PDU, including the UL MAC control element and a subheader for the UL MAC control element, and transmits 346 the UL MAC PDU to the DU 174. In some implementations, in the PPW deactivation request, the UE 102 includes PPW ID(s) indicating the activated PPW configuration(s) that the UE 102 requests to deactivate.

In some implementations, the DU 174 includes PPW ID(s) indicating the PPW configuration(s) to be deactivated in the PPW deactivation command. In some implementations, the DU 174 determines PPW ID(s) based on the PRS measurement information item(s) included in the CU-to-DU message of event 344, if included. In some implementations, the DU 174 performs a look up of the table (e.g., as described for Fig. 3A) to determine the PPW ID(s) based on the PRS measurement information item(s). In some cases, such as when receiving 346 the PPW deactivation request, the DU 174 sets the PPW ID(s) in the PPW deactivation command to value(s) of the PPW ID(s) in the PPW deactivation request.

In some implementations, the DU 174 transmits 350, to the CU 172, a DU-to-CU message, including PPW status indicating that the PPW configuration(s) for the UE 102 are deactivated, after or in respnse to transmitting 348 the PPW deactivation command to the UE 102. Thus, the CU 172 determines that the UE 102 deactivates the PPW configuration(s) and/or stops performing measurements on PRS(s) transmitted by the TRP(s) from the PPW status. In some implementations, the DU-to-CU message of event 350 is an existing F1AP message (e.g., as defined in 3GPP specification 38.473). In other implementations, the DU-to-CU message is a new F1AP message (e.g., a Measurement Status message or PPW Status message).

In some implementations, the CU 172 transmits 352 a BS-to-LMF message including the PPW status to the LMF 168. Thus, the LMF 168 determines that the UE 102 deactivates the PPW configuration(s) and/or stops performing measurements on PRS(s) transmitted by the TRP(s) from the PPW status. In some implementations, the BS-to-LMF message of event 352 is an existing NRPPa message (e.g., as defined in 3GPP specification 38.455). In other implementations, the BS-to-LMF message is a new NRPPa message (e.g., a Measurement Status message or PPW Status message).

The events 342, 344, 346, 348, 350 and 3752 are collectively referred to in Fig. 3D as a PPW deactivation procedure 398.

Later in time, depending on the implementation, the LMF 168, CU 172, and/or DU 174 perform 395 a PPW activation procedure with the UE 102 to activate the deactivated PPW configuration(s). In some implementations, in response to the PPW activation procedure 395, the UE 102 activates 339 the PPW configuration(s) identified by the PPW ID(s) in a PPW activation command in the procedure 395. After activating the PPW configuration(s), the UE 102 performs 339 measurements on PRS(s) transmitted by the TRP(s), using PPW(s) in the activated PPW configuration(s). In some implementations, the UE 102 obtains measurement results from the measurements and transmits 341 the measurement results to the LMF 168 via the base station 104 (i.e., the DU 174 and CU 172). In some implementations, the UE 102 generates LPP message(s) (e.g., *ProvideLocationInformation* message(s)), including the measurement results, and transmits 341 the LPP message(s) to the LMF 168 via the base station 104.

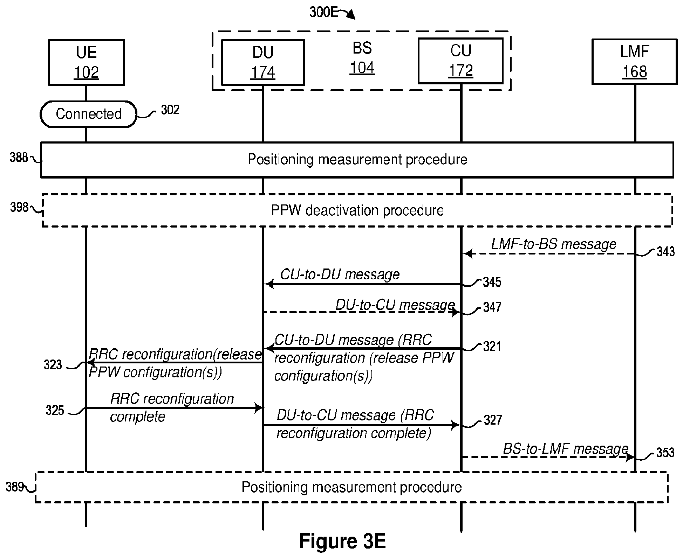

Referring next to Fig. 3E, a scenario 300E is generally similar to the scenarios 300A-D. The differences among the scenarios 300E and scenarios 300A-D are discussed below.

In some implementations, after the positioning measurement procedure 388, the LMF 168 transmits 343, to the CU 172, an LMF-to-BS message causing the CU 172 to release the PPW configuration(s). In some implementations, the LMF-to-BS message is an existing NRPPa message (e.g., as defined in 3GPP specification 38.455). For example, the LMF-to-BS message is a *Measurement Preconfiguration Required* message, a *Measurement Abort* message, or an *Error Indication* message. In other implementations, the LMF-to-BS message is a new NRPPa message. For example, the LMF-to-BS message is a Measurement Deactivation message, Measurement Preconfiguration Release Required message, or Measurement Preconfiguration Release Request message.

In response to or after receiving 343 the LMF-to-BS message, the CU 172 transmits 345, to the DU 174, a CU-to-DU message causing the DU 174 to release at least one of the PPW configuration(s). In response to or after receiving 345 the CU-to-DU message, the DU 174 releases the at least one of the PPW configuration(s) for the UE 102. In some implementations, the CU-to-DU message is an existing F1AP message (e.g., as defined in 3GPP specification 38.473). For example, the CU-to-DU message is a *Positioning Measurement Abort* message, a *Measurement Preconfiguration Required* message, or a *UE Context Modification Request* message. In other implementations, the CU-to-DU message is a new F1AP message (e.g., a Measurement Deactivation message, a Measurement Preconfiguration Release Required message, or a Measurement Preconfiguration Release Request message). Depending on the implementation, the DU 174 transmits 347 a DU-to-CU message to the CU 172 in response to the CU-to-DU message. In some implementations, the DU-to-CU message of event 347 is an existing F1AP message (e.g., a *Measurement Preconfiguration Confirm* message or a *UE Context Modification Response* message).

In response to or after receiving the LMF-to-BS message, the CU 172 generates an RRC reconfiguration message (e.g., *RRCReconfiguration* message) releasing the PPW configuration(s) and transmits 321 a CU-to-DU message (e.g., *DL RRC Message Transfer* message), including the RRC reconfiguration message, to the DU 174. In turn, the DU 174 transmits 323 the RRC reconfiguration message to the UE 102. In response to or after receiving 323 the RRC reconfiguration message, the UE 102 releases the PPW configuration(s).

In some implementations, the RRC reconfiguration message includes PPW release information including the PPW ID(s) of the at least one of the PPW configuration(s) to release the PPW configuration(s). For example, the PPW release information is a PPW release list IE. In such implementations, the UE 102 identifies the at least one of the PPW configuration(s) in accordance with the PPW ID(s) and releases the identified PPW configuration(s) in response to the RRC reconfiguration message or the PPW release information. In some implementations, the CU 172 generates the PPW release information and includes the PPW release information in the CU-to-DU message of event 345. In such implementations, the DU 174 identifies the PPW configuration(s) in accordance with the PPW ID(s) and releases the identified PPW configuration(s) in response to the CU-to-DU message or the PPW release information.

In response to the RRC reconfiguration message, the UE 102 transmits 325 an RRC reconfiguration complete message (e.g., *RRCReconfigurationComplete* message) to the DU 174, which in turn transmits 327 a DU-to-CU message (e.g., *UL RRC Message Transfer* message), including the RRC reconfiguration complete message, to the CU 172. In some implementations, after receiving 327 the DU-to-CU message of event 327, the CU 172 transmits 353 a BS-to-LMF message to the LMF 168 in response to the LMF-to-BS message of event 343. Alternatively, the CU 172 transmits 353 the BS-to-LMF message before receiving the DU-to-CU message of event 327.

In some implementations, the CU 172 autonomously determines to release the at least one of the PPW configuration(s) without receiving an LMF-to-BS message like event 343. In such implementations, the CU 172 transmits 345 the CU-to-DU message and/or 321 the RRC reconfiguration message to the DU 174 in response to the determination.

In some implementations, later in time, the LMF 168, CU 172, and/or DU 174 performs 389 a positioning measurement procedure with the UE 102, similar to procedure 388.

In some implementations, the LMF 168, CU 172, and/or DU 174 perform 398 a PPW deactivation procedure after performing 388 the positioning measurement procedure and before receiving 343 the LMF-to-BS message or transmitting 345 the CU-to-DU message.

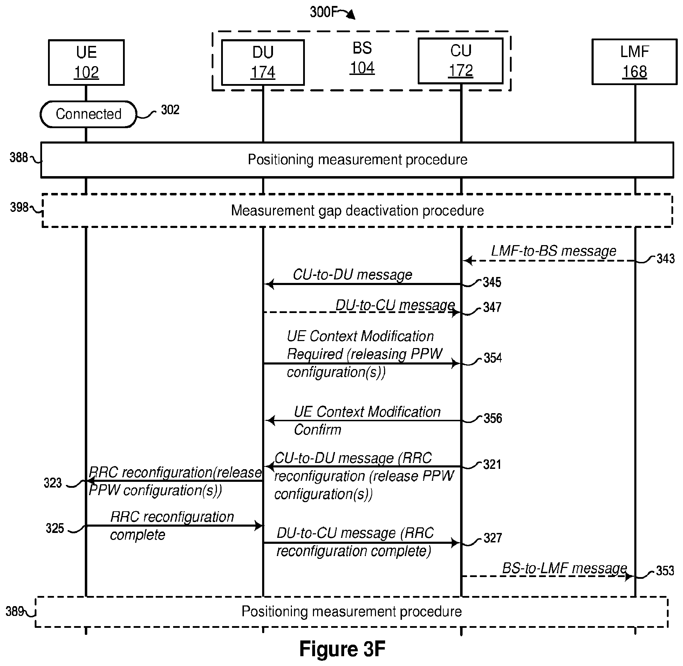

Referring next to Fig. 3F, a scenario 300F is generally similar to the scenarios 300A-E. The differences among the scenarios 300F and scenarios 300A-E are discussed below.

In the scenario 300F, the DU 174 transmits 354 a *UE Context Modification Required* message, including the PPW release information indicating to release the PPW configuration(s), after or in response to receiving 345 the CU-to-DU message. In response, the CU 172 transmits 356 a *UE Context Modification Confirm* message to the DU 174. In some implementations, the CU 172 includes the PPW release information received, from the DU 174, in the RRC reconfiguration message. In some such implementations, the CU 172 does not include the PPW release information in the CU-to-DU message of event 345.

Next, several example methods that can be implemented in a DU of a BS or a CU of the BS are discussed with reference to Figs. 4A-7. Each of these methods can be implemented using processing hardware such as one or more processors to execute instructions stored on a non-transitory computer-readable medium such as a computer memory.

Referring first to Fig. 4A, a method 400A is a method for configuring a PPW for a UE (e.g., the UE 102) and implemented in a DU (e.g., the DU 174).

The method 400A begins at block 402, where the DU communicates with a UE and a CU (e.g., the CU 172). At block 404, the DU receives, from the CU, a first CU-to-DU message requesting configuration of a PPW for the UE (e.g., event 310). At block 406, the DU transmits, to the CU, a first DU-to-CU message in response to the first CU-to-DU message (e.g., event 312). In some implementations, the CU transmits, to the DU, the first CU-to-DU message to confirm a successful configuration of PPW(s). At block 408, the DU transmits, to the CU, a second DU-to-CU message, including PPW configuration(s) *1*, ..., *M* for the UE, in response to the first CU-to-DU message (e.g., event 314), where *M* is an integer and larger than zero. At block 410, the DU receives, from the CU, a second CU-to-DU message in response to the second DU-to-CU message (e.g., event 316). At block 412, the DU transmits a PPW activation command to the UE to activate at least one of the one or more of PPW configurations (e.g., event 332).

In some implementations, the first CU-to-DU message includes TRP PRS information item(s) *1*,*...,N,* where N is an interger and larger than zero. In some implementations, the DU generates a PPW configuration (e.g., a *MeasPPWConfig* IE), including the PPW configuration(s) *1, ..., M* (e.g., *DL-PRS-ProcessingWindowPreConfig-r17* IE(s) *1,* ..., *M*), and includes the PPW configuration in the second DU-to-CU message. In some implementations, the DU generates the PPW configuration(s) for positioning measurement (e.g., the UE uses PPW(s) in the PPW configuration(s) *1*, ..., *M* to measure PRS(s)).

In some implementations, the DU assigns PPW IDs *1*, ..., *M* for the PPW configuration(s) *1*, *..., M,* respectively. In some implementations, the DU includes the PPW IDs *1,* ..., *M* in the PPW configuration(s) *1*, ..., *M*, respectively. In other implementations, the DU includes the PPW ID(s) *1*, ..., *M* in the PPW configuration along with the PPW configuration(s) *1, ..., M.* In some implementations, the DU associates the PPW ID(s) *1*, ..., *M* with the TRP PRS information item(s) *1,...,N.* In some implementations, the DU associates a particular one of the PPW ID(s) with a particular one of the TRP PRS information item(s). In other implementations, the DU 174 associates a particular one of the PPW ID(s) with some of the TRP PRS information item(s). In some implementations, the DU creates a table to store the assocation(s) between the PPW ID(s) and TRP PRS information item(s).

In some implementations, in the PPW activation command, the DU includes at least one of the PPW ID(s) *1,...,M.* Each of the at least one PPW ID identifies a particular one of the at least one PPW configuration of the PPW configuration(s) *1,...,M.*

In some implementations, the DU generates a container configuration (e.g., a *CellGroupConfig* IE, a *BWP-DownlinkDedicated* IE, a *DL-PRSProcessingWindowPreConfigAddModList* IE, or a *DL-PRSProcessingWindowPreConfigAddModList-r17* IE) including the PPW configurations(s) *1,...,M* (e.g., *PPWConfig* IE(s) *1,...,M*) and includes the container configuration in the second DU-to-CU message.

Fig. 4B is a flow diagram of an example method 400B similar to the method 400A, except that method 400B includes blocks 409 and 411 instead of blocks 408 and 410. At block 409, the DU receives, from the CU, a second CU-to-DU message requesting configuring a PPW for the UE (e.g., event 315). At block 411, the DU transmits, to the CU, a second DU-to-CU message, including PPW configuration(s) *1*,...,*M* for the UE, in response to the second CU-to-DU message (e.g., event 317).

Fig. 4C is a flow diagram of an example method 400C similar to the method 400A, except that method 400C includes block 407 instead of blocks 406, 408, and 410. At block 407, the DU transmits, to the CU, a first DU-to-CU message, including PPW configuration(s) *1*,...,*M* for the UE, to confirm a successful configuration of PPW in response to the first CU-to-DU message (e.g., event 313).

In some implementations, the DU generates a container configuration (e.g., a *CellGroupConfig* IE, a *BWP-DownlinkDedicated* IE, a *DL-PRSProcessingWindowPreConfigAddModList* IE or a *DL-PRSProcessingWindowPreConfigAddModList-r17* IE) including the PPW configurations(s) *1*,...,*M* (e.g., *PPWConfig* IE(s) *1*,...,*M*) and includes the container configuration in the first DU-to-CU message.

Examples and implementations described in the previous figures (e.g., Figs. 3A-3F) can apply to Figs. 4A-4C.

Referring next to Fig. 5A, a method 500A is a method for configuring a PPW for a UE (e.g., the UE 102) and is implemented in a CU (e.g., the CU 172).

The method 500A begins at block 502, where the CU communicates with a UE and a DU (e.g., the DU 174). At block 504, the CU transmits, to the DU, a first CU-to-DU message requesting configuration of a PPW for the UE (e.g., event 310). At block 506, the CU receives, from the DU, a first DU-to-CU message in response to the first CU-to-DU message (e.g., event 312). In some implementations, the first DU-to-CU message confirms a successful configuration of PPW(s). At block 508, the CU receives, from the DU, a second DU-to-CU message, including PPW configuration(s) *1*,*...,M,* after transmitting the first CU-to-DU message (e.g., event 314), where Mis an integer and larger than zero. At block 510, the CU transmits, to the DU, a second CU-to-DU message in response to the second DU-to-CU message (e.g., event 316). At block 512, the CU transmits a message, including the PPW configuration(s) *1*,...,*M*, to the UE via the DU (e.g., events 320, 322). At block 514, the CU transmits a third CU-to-DU message to the DU to command the DU to activate at least one of the PPW configuration(s) *1,...,M* (e.g., event 330). At block 516, the CU receives one or more measurement results from the UE via the DU (e.g., event 340).

In some implementations, the first CU-to-DU message includes TRP PRS information item(s) *1*,*...,N,* where *N* is an integer and larger than zero. In some implementations, the second DU-to-CU message includes a container configuration (e.g., a *CellGroupConfig* IE, a *BWP-DownlinkDedicated* IE, a *DL-PRSProcessingWindowPreConfigAddModList* IE, or a *DL-PRSProcessingWindowPreConfigAddModList-r17* IE) including the PPW configuration(s) *1*,...,*M* (e.g., *DL-PRS-ProcessingWindowPreConfig* or *DL-PRS-ProcessingWindowPreConfig-r17* IE(s)).

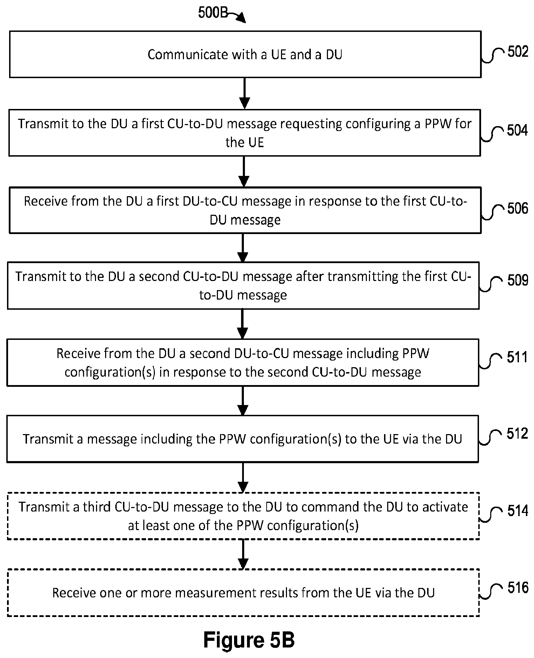

Fig. 5B is a flow diagram of an example method 500B similar to the method 500A, except that method 500B includes blocks 509 and 511 instead of blocks 508 and 510. At block 509, the CU transmits to the DU a second CU-to-DU message after transmitting the first CU-to-DU message (e.g., event 315). At block 511, the CU receives, from the DU, a second DU-to-CU message, including PPW configuration(s) *1*,...,*M*, in response to the second CU-to-DU message (e.g., event 317).

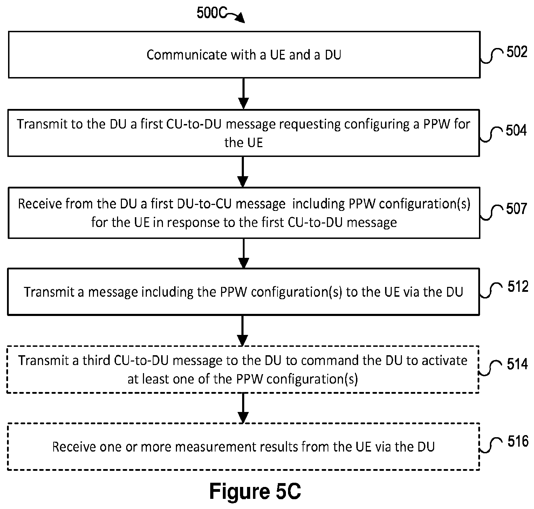

Fig. 5C is a flow diagram of an example method 500C similar to the method 500A, except that method 500C includes block 507 instead of blocks 506, 508, and 510. At block 507, the CU receives, from the DU, a first DU-to-CU message, including PPW configuration(s) *1*,...,*M* for the UE, in response to the first CU-to-DU message (e.g., event 313). In some implementations, the first DU-to-CU message confirms a successful configuration of PPW(s).

Examples and implementations described in the previous figures (e.g., Figs. 3A-4C) can apply to Figs. 5A-5C.

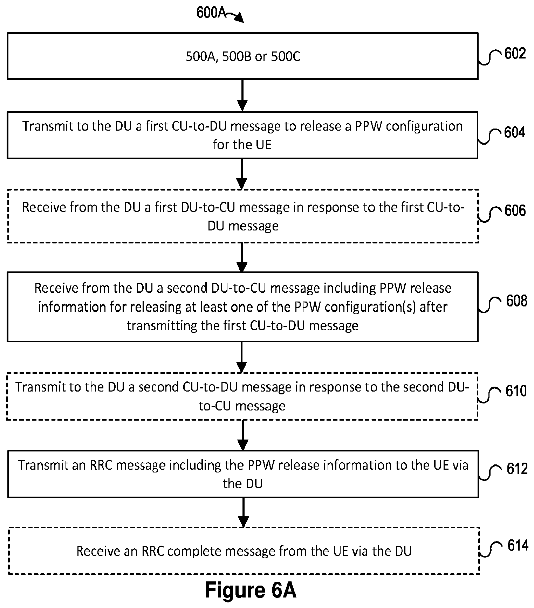

Referring next to Fig. 6A, a method 600A is a method for configuring a PPW for a UE (e.g., the UE 102) and is implemented in a CU (e.g., the CU 172).

The method 600A begins at block 602, where the flow performs at least one of the methods 500A, 500B, or 500C. At block 604, the CU transmits, to the DU, a first CU-to-DU message to release a PPW configuration for the UE (e.g., event 345). At block 606, the CU receives, from the DU, a first DU-to-CU message in response to the first CU-to-DU message (e.g., event 347). At block 608, the CU receives, from the DU, a second DU-to-CU message, including PPW release information for releasing at least one of the PPW configuration(s) *1*,*...,M,* after transmitting the first CU-to-DU message (e.g., event 354). At block 610, the CU transmits, to the DU, a second CU-to-DU message in response to the second DU-to-CU message (e.g., event 356). At block 612, the CU transmits an RRC message including the PPW release information to the UE via the DU (e.g., events 321, 323). At block 614, the CU receives an RRC complete message from the UE via the DU (e.g., events 325, 327).

In some implementations, the PPW release information includes PPW ID(s) identifying at least one PPW configuration. Each of the PPW ID(s) identifies a particular one of the PPW configuration(s). In some implementations, the DU identifies the released PPW configuration(s) in accordance with the first CU-to-DU message.

In some implementations, the CU at block 602 (e.g., while performing method 500A, 500B, or 500C) receives the PPW ID(s) from the DU. In some implementations, the CU includes PPW ID(s) for the at least one PPW configuration in the first CU-to-DU message. Thus, in some such implementations, the DU identifies at least one PPW configuration in accordance with the PPW ID(s) and releases the PPW configuration(s) accordingly. Alternatively, the CU does not include a PPW ID in the first CU-to-DU message.

In some implementations, the CU at block 602 transmits first TRP PRS information item(s) to the DU. In some implementations, the CU includes zero TRP PRS information item(s) in the first CU-to-DU message (i.e., the CU does not include TRP PRS information item(s) in the first CU-to-DU message). In some implementations, the CU includes zero TRP PRS information item(s) to indicate or request to release all of the PPW configuration(s). When, after, or in response to receiving zero TRP PRS information item(s) in the first CU-to-DU message, the DU releases all the PPW configuration(s). When, after, or in response to receiving zero TRP PRS information item(s) in the first CU-to-DU message, the DU generates the PPW release information including PPW ID(s) for all of the PPW configuration(s), in some implementations.

In other implementations, the CU transmits, to the DU, the first CU-to-DU message to indicate that positioning measurement is not needed or configured. In such implementations, when, after, or in response to receiving the first CU-to-DU message, the DU releases all the PPW configuration(s). In some implementations, when, after, or in response to receiving the first CU-to-DU message, the DU generates the PPW release information including PPW ID(s) for all of the PPW configuration(s).

In other implementations, the CU includes second TRP PRS information item(s) of the first TRP PRS information item(s) in the first CU-to-DU message. In some such implementations, the DU identifies the released PPW configuration(s) based on the second TRP PRS information item(s) and the first TRP PRS information item(s). For example, the released PPW configuration(s) are associated with TRP PRS information item(s) not included in the second TRP PRS information item(s). In some implementations, the DU generates the PPW release information including PPW ID(s) for the released PPW configuration(s) after identifying the released PPW configuration(s).

In some implementations, the CU transmits the first CU-to-DU message to the DU in response to receiving an LMF-to-BS message. For example, the LMF-to-BS message is or is part of event 343 of Fig. 3E or 3F. In other implementations, the CU transmits the first CU-to-DU message to the DU in response to receiving a third DU-to-CU message from the DU. For example, the third DU-to-CU message is or is part of event 350 of Fig. 3D. In another example, the third DU-to-CU message is a *Positioning Measurement Failure Indication* message.

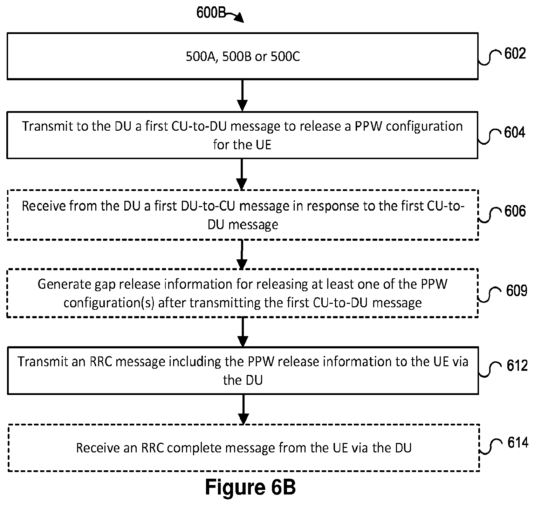

Fig. 6B is a flow diagram of an example method 600B similar to the method 600A, except that method 600B includes block 609 instead of blocks 608 and 610. At block 609, the CU generates PPW release information for releasing at least one PPW configuration after transmitting the first CU-to-DU message.

Examples and implementations described in the previous figures (e.g., Figs. 3A-5C) can apply to Figs. 6A and 6B.

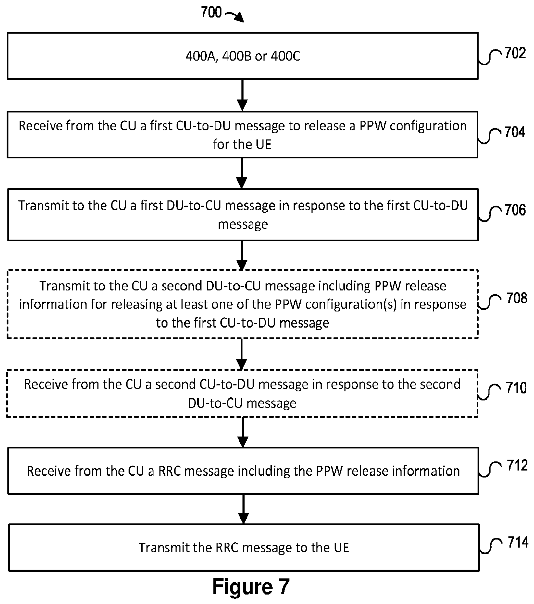

Referring next to Fig. 7, a method 700 is a method for configuring a PPW for a UE (e.g., the UE 102) and is implemented in a DU (e.g., the DU 174).

The method 700 begins at block 702, where the flow performs at least one of 400A, 400B, or 400C. At block 704, the DU receives, from the DU, a first CU-to-DU message to release a PPW configuration for the UE (e.g., event 345). At block 706, the DU transmits, to the DU, a first DU-to-CU message in response to the first CU-to-DU message (e.g., event 347). At block 708, the DU transmits, to the CU, a second DU-to-CU message including, PPW release information for releasing at least one of the PPW configuration(s) *1*,*...,M,* in response to the first CU-to-DU message (e.g., event 354). At block 710, the DU receives, from the CU, a second CU-to-DU message in response to the second DU-to-CU message (e.g., event 356). At block 712, the DU receives, from the CU, an RRC message including the PPW release indication (e.g., event 321). At block 714, the DU transmits the RRC message to the UE (e.g., event 323).

Examples and implementations described in the previous figures (e.g., Figs. 3A-6B) can apply to Fig. 7.

The following description may be applied to the description above.

Generally speaking, description for one of the above figures can apply to another of the above figures. In some implementations, "message" is used and can be replaced by "information element (IE)", and vice versa. In some implementations, "IE" is used and can be replaced by "field", and vice versa. In some implementations, "configuration" can be replaced by "configurations" or "configuration parameters", and vice versa. In some implementations, the "PPW configuration" can be replaced by "preconfigured PPW configuration".

A user device in which the techniques of this disclosure can be implemented (*e.g.,* the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g.,* code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC), a digital signal processor (DSP), etc.) to perform certain operations. A hardware module may also comprise programmable logic or circuitry (*e.g.,* as encompassed within a general-purpose processor or other programmable processor) that is temporarily configured by software to perform certain operations. The decision to implement a hardware module in dedicated and permanently configured circuitry, or in temporarily configured circuitry (*e.g.,* configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method for managing a positioning reference signal, PRS, processing window, PPW, at a UE (102), the method implemented in a central unit, CU, (172) of a distributed base station that also includes a distributed unit, DU, (174) the method comprising:
receiving, from the DU, a PPW configuration;
providing, to the UE via the DU, the PPW configuration; and
transmitting, to the DU, a request to deactivate the PPW configuration for the UE.

2. The method of claim 1, wherein:
the request to deactivate the PPW configuration includes a PRS measurement information item.

3. The method of claim 2, wherein the PRS measurement information item indicates at least one of:
(i) a reference point,
(ii) a measurement PRS periodicity, or
(iii) a measurement PRS length.

4. The method of claim 2, wherein the PRS measurement information item includes a measurement PRS offset.

5. The method of claim 1, wherein:
the request to deactivate the PPW configuration includes a *Measurement Preconfiguration Abort* message.

6. The method of any claims 1-4, further comprising:
receiving, from a Location Management Function, LMF, a *Measurement Deactivation* message;
wherein the transmitting of the request to deactivate the PPW configuration is in response to the receiving of the *Measurement Deactivation* message.

7. The method of claim 1 or 5, further comprising:
receiving, from an LMF, a *Measurement Abort* message;
wherein the transmitting of the request to deactivate the PPW configuration is in response to the receiving of the *Measurement Abort* message.

8. The method of any of the preceding claims, wherein:
transmitting the request to deactivate the PPW includes transmitting one of a CU-to-DU message or an F1 Application Protocol, F1AP, message.

9. The method of claim 1 or 7, wherein:
the providing of the configuration for the PPW includes providing a plurality of configurations for a plurality of respective PPWs; and
the transmitting of the request to deactivate the PPW configuration includes requesting deactivation of all of the plurality of configurations.

10. The method of any of the preceding claims, wherein:
the providing of the configuration for the PPW includes providing a plurality of configurations for a plurality of respective PPWs; the method further comprising:
assigning a respective PPW identifier, ID, to each of the plurality of configurations.

11. A method for managing a positioning reference signal, PRS, processing window, PPW, at a UE (102), the method implemented in a distributed unit, DU, (174) of a distributed base station that also includes a central unit, CU, (172) the method comprising:
providing, received from the CU, to the UE, a PPW configuration;
receiving, from a CU, a request to deactivate the PPW configuration for the UE; and
transmitting, to the UE, a PPW deactivation command.

12. The method of claim 11, wherein:
the transmitting of the PPW deactivation command includes transmitting a downlink, DL, medium access control, MAC, control element, CE.

13. The method of either of claims 11 or 12, wherein:
receiving the request to deactivate the PPW configuration includes receiving, from the CU, a PPW ID; and
transmitting the PPW ID in the deactivation command.

14. The method of any one of claims 11, 12, or 13 , wherein:
receiving the request to deactivate the PPW configuration includes receiving, from the CU, a Transmission-Reception Point, TRP, positioning reference signal, PRS, information;
the method further comprising:
determining, based on the TRP PRS information, at least one of i) a PPW ID corresponding to the PPW configuration, ii)a physical cell identity, PCI, of the UE, or iii) a serving cell ID of the UE, for the transmitting of the PPW deactivation command.

15. A radio access network, RAN, node comprising processing hardware and configured to implement a method according to any of the preceding claims.

## Patentansprüche

1. Verfahren zum Verwalten eines Positionierungsreferenzsignal-, PRS-, Verarbeitungsfensters, PPW, an einem UE (102), wobei das Verfahren in einer Zentraleinheit, CU, (172) einer verteilten Basisstation implementiert ist, die auch eine verteilte Einheit, DU, (174) beinhaltet, wobei das Verfahren umfasst:
Empfangen, von der DU, einer PPW-Konfiguration;
Bereitstellen, an das UE über die DU, der PPW-Konfiguration; und
Übertragen, an die DU, einer Anforderung zum Deaktivieren der PPW-Konfiguration für das UE.

2. Verfahren nach Anspruch 1, wobei:
die Anforderung zum Deaktivieren der PPW-Konfiguration ein PRS-Messinformationselement beinhaltet.

3. Verfahren nach Anspruch 2, wobei das PRS-Messinformationselement mindestens eines von Folgendem angibt:
(i) einen Referenzpunkt,
(ii) eine Mess-PRS-Periodizität, oder
(iii) eine Mess-PRS-Länge.

4. Verfahren nach Anspruch 2, wobei das PRS-Messinformationselement einen Mess-PRS-Offset beinhaltet.

5. Verfahren nach Anspruch 1, wobei:
die Anforderung zum Deaktivieren der PPW-Konfiguration eine *Measurement Preconfiguration Abort*-Nachricht beinhaltet.

6. Verfahren nach einem der Ansprüche 1-4, ferner umfassend:
Empfangen, von einer Location Management Function, LMF, einer *Measurement Deactivation-Nachricht;*
wobei das Übertragen der Anforderung zum Deaktivieren der PPW-Konfiguration als Reaktion auf das Empfangen der *Measurement Deactivation*-Nachricht erfolgt.

7. Verfahren nach Anspruch 1 oder 5, ferner umfassend:
Empfangen, von einer LMF, einer *Measurement Abort*-Nachricht;
wobei das Übertragen der Anforderung zum Deaktivieren der PPW-Konfiguration als Reaktion auf das Empfangen der *Measurement* Abort-Nachricht erfolgt.

8. Verfahren nach einem der vorhergehenden Ansprüche, wobei:
Übertragen der Anforderung zum Deaktivieren des PPW Übertragen eines von einer CU-zu-DU-Nachricht oder einer F1-Anwendungsprotokoll-, F1AP-, Nachricht beinhaltet.

9. Verfahren nach Anspruch 1 oder 7, wobei:
das Bereitstellen der Konfiguration für das PPW Bereitstellen einer Mehrzahl von Konfigurationen für eine Mehrzahl von jeweiligen PPWs beinhaltet; und
das Übertragen der Anforderung zum Deaktivieren der PPW-Konfiguration Anfordern einer Deaktivierung aller der Mehrzahl von Konfigurationen beinhaltet.

10. Verfahren nach einem der vorhergehenden Ansprüche, wobei:
das Bereitstellen der Konfiguration für das PPW Bereitstellen einer Mehrzahl von Konfigurationen für eine Mehrzahl von jeweiligen PPWs beinhaltet; wobei das Verfahren ferner umfasst: Zuweisen einer jeweiligen PPW-Kennung, ID, zu jeder der Mehrzahl von Konfigurationen.

11. Verfahren zum Verwalten eines Positionierungsreferenzsignal-, PRS-, Verarbeitungsfensters, PPW, an einem UE (102), wobei das Verfahren in einer verteilten Einheit, DU, (174) einer verteilten Basisstation implementiert ist, die auch eine Zentraleinheit, CU, (172) beinhaltet, wobei das Verfahren umfasst:
Bereitstellen, von der CU empfangen, an das UE, einer PPW-Konfiguration;
Empfangen, von einer CU, einer Anforderung zum Deaktivieren der PPW-Konfiguration für das UE; und
Übertragen, an das UE, eines PPW-Deaktivierungsbefehls.

12. Verfahren nach Anspruch 11, wobei:
das Übertragen des PPW-Deaktivierungsbefehls Übertragen eines Downlink-, DL-, Medienzugangssteuerungs-, MAC-, Steuerelements, CE, beinhaltet.

13. Verfahren nach einem der Ansprüche 11 oder 12, wobei:
Empfangen der Anforderung zum Deaktivieren der PPW-Konfiguration Empfangen, von der CU, einer PPW-ID beinhaltet; und
Übertragen der PPW-ID in dem Deaktivierungsbefehl.

14. Verfahren nach einem der Ansprüche 11, 12 oder 13, wobei:
Empfangen der Anforderung zum Deaktivieren der PPW-Konfiguration Empfangen, von der CU, von Transmission-Reception-Point-, TRP-, Positionierungsreferenzsignal-, PRS-, Informationen beinhaltet;
wobei das Verfahren ferner umfasst:
Bestimmen, basierend auf den TRP-PRS-Informationen, von mindestens eines von i) einer PPW-ID, die der PPW-Konfiguration entspricht, ii) einer physischen Zellidentität, PCI, der UE, oder iii) einer Serving-Cell-ID der UE, für das Übertragen des PPW-Deaktivierungsbefehls.

15. Funkzugangsnetzwerk-, RAN-, Knoten, umfassend Verarbeitungshardware und konfiguriert zum Implementieren eines Verfahrens nach einem der vorhergehenden Ansprüche.

## Revendications

1. Procédé de gestion d'une fenêtre de traitement, PPW, de signal de référence de positionnement, PRS, au niveau d'un UE (102), le procédé étant mis en œuvre dans une unité centrale, CU, (172) d'une station de base distribuée qui comporte également une unité distribuée, DU, (174), le procédé comprenant :
la réception, depuis la DU, d'une configuration de PPW ;
la fourniture à l'UE, par l'intermédiaire de la DU, de la configuration de PPW ; et
la transmission, à la DU, d'une demande de désactivation de la configuration de PPW pour l'UE.

2. Procédé selon la revendication 1, dans lequel :
la demande de désactivation de la configuration de PPW comporte un élément d'information de mesure de PRS.

3. Procédé selon la revendication 2, dans lequel l'élément d'information de mesure de PRS indique au moins l'un des éléments suivants :
(i) un point de référence,
(ii) une périodicité de PRS de mesure, ou
(iii) une longueur de PRS de mesure.

4. Procédé selon la revendication 2, dans lequel l'élément d'information de mesure de PRS comporte un décalage de PRS de mesure.

5. Procédé selon la revendication 1, dans lequel :
la demande de désactivation de la configuration de PPW comporte un message *d'abandon de préconfiguration de mesure.*

6. Procédé selon l'une quelconque des revendications 1 à 4, comprenant en outre :
la réception, depuis une fonction de gestion de localisation, LMF, d'un message de *désactivation de mesure* ;
dans lequel la transmission de la demande de désactivation de la configuration de PPW est réalisée en réponse à la réception du message de *désactivation de mesure.*

7. Procédé selon la revendication 1 ou 5, comprenant en outre :
la réception, depuis une LMF, d'un message *d'abandon de mesure* ; dans lequel la transmission de la demande de désactivation de la configuration de PPW est réalisée en réponse à la réception du message *d'abandon de mesure.*

8. Procédé selon l'une quelconque des revendications précédentes, dans lequel :
la transmission de la demande de désactivation de PPW comporte la transmission de l'un d'un message CU à DU ou d'un message F1 Application Protocol (F1AP).

9. Procédé selon la revendication 1 ou 7, dans lequel :
la fourniture de la configuration pour la PPW comporte la fourniture d'une pluralité de configurations pour une pluralité de PPW respectives ; et
la transmission de la demande de désactivation de la configuration de PPW comporte la demande de désactivation de l'ensemble de la pluralité de configurations.

10. Procédé selon l'une quelconque des revendications précédentes, dans lequel :
la fourniture de la configuration pour la PPW comporte la fourniture d'une pluralité de configurations pour une pluralité de PPW respectives ; le procédé comprenant en outre :
l'attribution d'un identifiant, ID, de PPW respectif à chacune de la pluralité de configurations.

11. Procédé de gestion d'une fenêtre de traitement, PPW, de signal de référence de positionnement, PRS, au niveau d'un UE (102), le procédé étant mis en œuvre dans une unité distribuée, DU, (174) d'une station de base distribuée qui comporte également une unité centrale, CU, (172), le procédé comprenant :
la fourniture, à l'UE, d'une configuration de PPW reçue depuis la CU ;
la réception, depuis une CU, d'une demande de désactivation de la configuration de PPW pour l'UE ; et
la transmission, à l'UE, d'une commande de désactivation de PPW.

12. Procédé selon la revendication 11, dans lequel :
la transmission de la commande de désactivation de PPW comporte la transmission d'un élément de commande, CE, de contrôle d'accès au support, MAC, de liaison descendante, DL.

13. Procédé selon l'une ou l'autre des revendications 11 ou 12, dans lequel :
la réception de la demande de désactivation de la configuration de PPW comporte la réception, depuis la CU, d'un ID de PPW ; et
la transmission de l'ID de PPW dans la commande de désactivation.

14. Procédé selon l'une quelconque des revendications 11, 12 ou 13, dans lequel :
la réception de la demande de désactivation de la configuration de PPW comporte la réception, depuis la CU, d'informations de signal de référence de positionnement, PRS, de point de transmission-réception, TRP ;
le procédé comprenant en outre :
la détermination, sur la base des informations de PRS de TRP, d'au moins l'un des éléments suivants : i) un ID de PPW correspondant à la configuration de PPW, ii) une identité de cellule physique, PCI, de l'UE, ou iii) un ID de cellule de service de l'UE, pour la transmission de la commande de désactivation de PPW.

15. Nœud de réseau d'accès radio, RAN, comprenant un matériel de traitement et configuré pour mettre en œuvre un procédé selon l'une quelconque des revendications précédentes.
